(19) Europäisches Patentamt
European Patent Office
Office européen des brevets

(11) **EP 4 092 356 B1**

(12) **FASCICULE DE BREVET EUROPEEN**

(45) Date de publication et mention de la délivrance du brevet:
**03.07.2024 Bulletin 2024/27**

(21) Numéro de dépôt: **22173689.5**

(22) Date de dépôt: **17.05.2022**

(51) Classification Internationale des Brevets (IPC):
**F25B 15/00** (2006.01)    **F25B 15/02** (2006.01)
**F25B 15/04** (2006.01)    **F25B 15/06** (2006.01)
**F28D 9/04** (2006.01)    **F25B 37/00** (2006.01)

(52) Classification Coopérative des Brevets (CPC):
**F25B 15/00; F25B 15/02; F25B 15/04; F25B 15/06; F25B 37/00; F28D 9/04;** F25B 2333/006; Y02A 30/27; Y02B 30/62

(54) **MACHINE À ABSORPTION COMPRENANT DES ÉCHANGEURS À PLAQUE EN SPIRALE**

ABSORPTIONSMASCHINE MIT SPIRALFÖRMIGEN PLATTENWÄRMETAUSCHERN

ABSORPTION MACHINE COMPRISING SPIRAL PLATE HEAT EXCHANGERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.05.2021 FR 2105303**

(43) Date de publication de la demande:
**23.11.2022 Bulletin 2022/47**

(73) Titulaire: **Commissariat à l'énergie atomique et aux énergies alternatives
75015 Paris (FR)**

(72) Inventeurs:
• **ASTE, Fabio**
**38054 GRENOBLE (FR)**
• **DEMASLES, Hélène**
**38054 GRENOBLE (FR)**
• **PHAN, Hai Trieu**
**38054 GRENOBLE (FR)**

(74) Mandataire: **Hautier IP
20, rue de la Liberté
06000 Nice (FR)**

(56) Documents cités:
CA-A1- 2 969 595    FR-A1- 2 993 648
US-A- 5 916 258

## Description

## DOMAINE TECHNIQUE

La présente invention concerne le domaine des machines à absorption. Elle trouve pour application particulièrement avantageuse le domaine des machines à absorption ammoniac-eau pour la production de froid et/ou de chaud.

## ETAT DE LA TECHNIQUE

Dans un contexte environnemental toujours plus délicat d'un point de vue énergétique, la valorisation de la chaleur industrielle et l'optimisation des consommations du résidentiel sont des passages clés de la transition écologique. Les politiques énergétiques actuelles poussent dans cette direction et soulignent l'importance de la gestion des échanges thermiques, soit froids soit chauds, dans les immeubles, les bâtiments industriels et même dans les zones rurales.

Il existe diverses solutions technologiques dont plusieurs se basant sur les principes de la thermodynamique.

Par exemple, la machine à absorption eau-ammoniac, grâce à son principe de fonctionnement, permet de réaliser un circuit frigorifique ou de pompe à chaleur en utilisant comme source d'énergie de la chaleur à moyenne-haute température au lieu de l'énergie électrique. En effet, l'énergie électrique est généralement coûteuse, alors que la chaleur peut être moins onéreuse, voire résulter comme rejet d'un procédé industriel.

Ainsi, une machine à absorption peut facilement être couplée à des systèmes solaires thermiques, des réseaux de chaleur, des usines industrielles qui nécessitent du froid négatif et même des générateurs électriques turbo-gaz de grosse puissance.

Toutefois, les systèmes à architecture avancée, par exemple de type échangeur de chaleur générateur-absorbeur, en anglais *Generator-Absorber heat eXchanger* (abrégé GAX dans la suite) rencontrent des freins à leur déploiement et les machines à architecture standard atteignent déjà leur limite de performance. Pour offrir une alternative viable industriellement et économiquement, les machines à absorption doivent faire l'objet d'améliorations, visant notamment à améliorer la performance, la compacité, baisser le coût et augmenter l'amplitude des conditions opérationnelles.

Le document US 5 916 258 A décrit un système de génération et de rectification de vapeur dans lequel une solution riche est introduite au niveau de deux plaques de distribution, et se sépare en une solution pauvre au niveau du régénérateur et une solution réfrigérante au sommet de la colonne. Ce système de génération comprend un échangeur thermique dans lequel circule la solution riche et un échangeur thermique dans lequel circule le réfrigérant sous forme vapeur.

Le document FR 2 993 648 A1 décrit un module absorbeur pour machine à absorption comprenant un échangeur à plaque spiralée.

Un objet de la présente invention est donc de proposer une machine à absorption améliorée et performante en conciliant les nécessités techniques et économiques.

Les autres objets, caractéristiques et avantages de la présente invention apparaîtront à l'examen de la description suivante et des dessins d'accompagnement. Il est entendu que d'autres avantages peuvent être incorporés.

## RESUME

Pour atteindre cet objectif, selon un aspect on prévoit une machine à absorption selon la revendication 1, comprenant un système de génération et rectification de vapeur pour machine à absorption, dans lequel circule un mélange comprenant un premier fluide et un deuxième fluide, le mélange présentant une concentration massique en deuxième fluide variant en fonction de sa position dans le système de façon à définir pour le mélange, en fonction de sa position, au moins une solution dite pauvre en deuxième fluide, une solution dite riche en deuxième fluide, et une solution dite réfrigérante.

Avantageusement, le système comprend, au moins :

- une zone de distribution comprenant une entrée de la solution riche, destinée à être raccordée à un circuit d'une machine à absorption dans lequel circule le mélange,

- un module générateur de chaleur comprenant un premier échangeur thermique à plaques en spirale configuré pour chauffer le mélange issu de la zone de distribution, et comprenant une sortie de la solution pauvre,

- un module rectifieur comprenant un deuxième échangeur thermique à plaques en spirale configuré pour refroidir le mélange issu de la zone de distribution, et comprenant une sortie de la solution réfrigérante.

La zone de distribution est située, selon une projection sur un axe vertical, entre le module générateur et le module rectifieur, la zone de distribution, le module générateur et le module rectifieur étant configurés de sorte que, du module générateur au module rectifieur :

- le premier fluide de la solution riche se condense,

- le deuxième fluide de la solution riche s'évapore,

pour obtenir la solution pauvre en sortie du module générateur et la solution réfrigérante en sortie du module rectifieur.

La zone de distribution est « située » entre le module générateur et le module rectifieur, ne signifie pas uniquement « situé fluidiquement entre » mais spatialement située entre. La zone de distribution est ainsi définie entre le module générateur et le module rectifieur et permet de distribuer la solution riche avec un condensat qui descend vers le module générateur et la vapeur qui remonte vers le module rectifieur. Un échange de chaleur entre le condensat et la vapeur dans cette zone de distribution permet de récupérer de l'énergie portée par la vapeur issue du générateur tout en purifiant sa concentration en deuxième fluide.

Les échangeurs à plaques en spirale permettent en outre d'améliorer les échange thermiques en augmentant la surface d'échange de la vapeur et le condensat avec des fluides caloporteurs circulant dans les échangeurs. Le système de génération et de rectification permet ainsi un meilleur échange thermique et une meilleure séparation de phase du premier et du deuxième fluide, par rapport aux solutions existantes.

Les échangeurs à plaques en spirale permettent en outre une mutualisation des modules générateur et rectifieur en une seule colonne. L'utilisation des échangeurs à plaques en spirale permet d'obtenir une machine compacte avec une quantité limitée de composant. Les échanges thermiques et la séparation de phase pour obtenir séparément la solution réfrigérante et la solution pauvre sont en effet réalisés au même temps, sans nécessiter de bouteilles de séparation comme c'est le cas par exemple dans les solutions comprenant des échangeurs à plaques standard dans les modules générateur et rectifieur.

Notamment du fait de cette amélioration des échanges thermiques, la compacité de chaque module et donc du système de génération et de rectification de vapeur est améliorée, notamment par rapport aux solutions utilisant des échangeurs en film tombant ou à serpentin. Les échangeurs en film tombant ou à serpentin occupent en effet beaucoup d'espace et l'ajout d'un module rectifieur au sommet augmente encore l'encombrement associé à la colonne.

De plus, cela permet de faciliter l'inspection, la substitution et la maintenance des pièces du système.

Selon un exemple, la zone de distribution, le module générateur et le module rectifieur sont situés dans une enveloppe formant une colonne. Selon un exemple, la zone de distribution, le module générateur et le module rectifieur sont répartis verticalement dans l'enveloppe. Selon un exemple, la zone de distribution, le module générateur et le module rectifieur sont superposés selon une direction principale d'extension de l'enveloppe.

La machine à absorption comprend un mélange en circulation dans un circuit, le mélange comprenant un premier fluide et un deuxième fluide, et la machine présente une première configuration de production de froid et une deuxième configuration de production de chaleur, le mélange en circulation présentant une concentration massique en deuxième fluide variant en fonction de sa position dans le circuit de sorte à définir pour le mélange en circulation, en fonction de la position, une solution dite pauvre, une solution dite riche, et une solution dite réfrigérante, la machine comprenant au moins :

- un module absorbeur configuré pour augmenter le taux de concentration massique du deuxième fluide de la solution pauvre de façon à transformer la solution pauvre en solution riche,

- un premier dispositif d'échange thermique configuré pour faire interagir thermiquement la solution riche à partir de la température de la solution pauvre,

- le système de génération et rectification de vapeur pour machine à absorption selon le premier aspect, configuré pour transformer la solution riche de façon à obtenir la solution pauvre en sortie du module générateur et la solution réfrigérante en sortie du module rectifieur,

- un module condenseur configuré pour condenser la solution réfrigérante issue du module rectifieur du système,

- un module évaporateur configuré pour évaporer au moins en partie la solution réfrigérante issue du module condenseur.

Dans la première configuration, la machine est configurée pour refroidir un fluide caloporteur extérieur circulant dans le module évaporateur.

Dans la deuxième configuration, un fluide caloporteur extérieur circule dans le module absorbeur et un fluide caloporteur extérieur circule dans le module condenseur, la machine étant configurée pour augmenter la température d'au moins un et de préférence de chacun desdits fluide caloporteur extérieur.

Le taux de concentration massique du deuxième fluide de la solution pauvre est plus particulièrement augmenté par absorption de la solution réfrigérante dans le module absorbeur.

Selon un exemple, le fluide caloporteur extérieur circulant dans le module absorbeur et le fluide caloporteur extérieur circulant dans le module condenseur forment un même fluide caloporteur extérieur, dit fluide caloporteur extérieur commun. La machine est alors configurée pour augmenter la température du fluide caloporteur extérieur commun.

La machine à absorption présente les effets et avantages décrits relativement au système selon le premier aspect. La machine à absorption permet en outre de réduire l'encombrement des machines classiques.

La machine à absorption offre en outre une double fonction : une fonction frigorifique et une fonction de pompe à chaleur.

De plus, l'inspection de la machine est facilitée, ainsi que la substitution et la maintenance des pièces de la machine.

La machine permet par ailleurs d'atteindre des coefficients de performance plus élevés que les solutions existantes.

**BREVE DESCRIPTION DES FIGURES**

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

La figure 1 représente une vue d'ensemble d'un exemple de système de génération et de rectification de vapeur selon l'invention.

Les figures 2A et 2B représentent des vues de principe d'un exemple d'échangeur à plaques en spirale.

Les figures 3A et 3B représentent respectivement le module générateur et le module rectifieur selon des exemples de réalisation.

La figure 4 représente un schéma d'un mode de réalisation selon la présente invention d'une machine à absorption dans une configuration de production de froid.

La figure 5 représente un schéma d'un mode de réalisation selon la présente invention d'une machine à absorption dans une configuration de production de chaleur.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les dimensions ne sont pas représentatives de la réalité.

**DESCRIPTION DÉTAILLÉE**

Avant d'entamer une revue détaillée de modes de réalisation de l'invention, sont énoncées ci-après des caractéristiques optionnelles de l'un quelconque des aspects de l'invention, qui peuvent éventuellement être utilisées en association ou alternativement.

Selon un exemple, le premier fluide comprend de l'eau et/ou un solvant tel que le nitrate de lithium ou le thiocyanate de sodium, et dans laquelle le deuxième fluide comprend de l'ammoniac ou de l'alcool, de préférence le premier fluide est de l'eau et le deuxième fluide est de l'ammoniac.

Selon un exemple, le système comprend en outre un module pré-rectifieur comprenant de préférence un troisième échangeur thermique à plaques en spirale et disposé entre la zone de distribution et le module rectifieur. Le module pré-rectifieur peut être configuré pour refroidir le mélange issu de la zone de distribution. Ainsi, le module pré-rectifieur permet d'améliorer encore la séparation entre les premier et deuxième fluides en ajoutant un niveau d'échange thermique supplémentaire. La qualité de la solution réfrigérante et ainsi encore améliorée en sortie du système, ce qui permet d'améliorer le coefficient de performance de la machine à absorption.

Selon un exemple, la zone de distribution, le module générateur, le module pré-rectifieur et le module rectifieur sont situés dans une enveloppe formant une colonne. Selon un exemple, la zone de distribution, le module générateur, le module pré-rectifieur et le module rectifieur sont répartis verticalement dans l'enveloppe. Selon un exemple, la zone de distribution, le module générateur, le module pré-rectifieur et le module rectifieur sont superposés selon une direction principale d'extension de l'enveloppe.

Selon un exemple, le premier échangeur thermique à plaques en spirale et le deuxième échangeur thermique à plaques en spirale sont distincts et de préférence distants l'un de l'autre.

Selon un exemple, le premier échangeur thermique à plaques en spirale et le troisième échangeur thermique à plaques en spirale sont distincts et de préférence distants l'un de l'autre.

Selon un exemple, le premier échangeur thermique à plaques en spirale, le deuxième échangeur thermique à plaques en spirale et le troisième échangeur thermique à plaques en spirale sont distincts et de préférence distants l'un de l'autre.

Selon un exemple, la solution pauvre présente un premier taux de concentration massique en deuxième fluide, la solution riche présente un deuxième taux de concentration massique en deuxième fluide, et la solution réfrigérante présente un troisième taux de concentration massique en deuxième fluide. Le premier taux de concentration, le deuxième taux de concentration, et le troisième taux de concentration peuvent être chacun différents les uns des autres. Le premier taux de concentration peut être inférieur au deuxième taux de concentration. Le premier taux de concentration et le deuxième taux de concentration peuvent être inférieurs au troisième taux de concentration.

Selon un exemple, la machine à absorption comprend en outre un troisième dispositif d'échange thermique configuré pour faire interagir thermiquement la solution réfrigérante avant son entrée dans le module évaporateur avec la solution réfrigérante après sa sortie du module évaporateur.

Selon un exemple, au moins l'un parmi le module absorbeur, le premier dispositif d'échange thermique, le module condenseur, le module évaporateur comprend au moins un échangeur thermique à plaques.

L'utilisation d'échangeur à plaques permet de réduire l'encombrement des machines à absorption de l'art antérieur, notamment par rapport aux échangeurs à film ou a serpentins. Cela permet en outre de réduire les coûts de fabrication des machines à absorption de l'art antérieur, ainsi qu'une maintenance plus simple.

Selon cet exemple, un échangeur thermique à plaques et de préférence chaque échangeur à plaques est configuré pour que les fluides le traversant circulent en contre-courant les uns relativement aux autres. Ainsi, les échanges thermiques sont améliorés.

Selon un exemple, le module absorbeur comprend :

- une entrée de la solution pauvre, la solution pauvre présentant une première température,

- une sortie de la solution riche, la solution riche présentant une deuxième température de préférence inférieure à la première température,

- une entrée d'un premier fluide caloporteur extérieur, et

- une sortie du premier fluide caloporteur extérieur.

Selon un exemple, le module absorbeur est configuré pour faire interagir thermiquement un mélange de la solution pauvre et de la solution réfrigérante avec le premier fluide caloporteur extérieur de sorte à transformer le mélange de la solution pauvre et de la solution réfrigérante en solution riche. De préférence, le module absorbeur est configuré pour diminuer la température du mélange de la solution pauvre et de la solution réfrigérante, de façon à augmenter le taux de concentration massique du deuxième fluide pour transformer la solution pauvre en solution riche.

Selon un exemple, le premier dispositif d'échange thermique comprend :

- une entrée de la solution pauvre,

- une sortie de la solution pauvre,

- une entrée de la solution riche, et

- une sortie de la solution riche.

Selon un exemple, le premier dispositif d'échange thermique est configuré pour augmenter la température de la solution riche à partir de la température de la solution pauvre. La température de la solution riche est de préférence inférieure à la température de la solution pauvre au niveau du premier dispositif d'échange thermique.

Selon un exemple, l'entrée de la solution riche du premier dispositif d'échange thermique est fluidiquement connectée à la sortie de la solution riche du module absorbeur, et la sortie de la solution pauvre du premier dispositif d'échange thermique est fluidiquement connectée à l'entrée de la solution pauvre du module absorbeur.

Selon un exemple, le système de génération et rectification de vapeur comprend :

- une zone de distribution comprenant l'entrée de la solution riche,

- un module générateur comprenant la sortie de la solution pauvre, et

- un module rectifieur comprenant la sortie de la solution réfrigérante.

Le système de génération et rectification de vapeur est configuré pour séparer la solution riche la solution réfrigérante et la solution pauvre.

Selon un exemple, l'entrée de la solution riche de la zone de distribution est fluidiquement connectée à la sortie de la solution riche du premier dispositif d'échange thermique.

Selon un exemple, le module générateur est configuré pour faire interagir thermiquement le mélange issu de la zone de distribution et un deuxième fluide caloporteur extérieur de sorte à augmenter la température du mélange.

Selon un exemple, le module rectifieur est configuré pour faire interagir thermiquement le mélange issu de la zone de distribution et un troisième fluide caloporteur extérieur de sorte à augmenter la température du mélange.

Selon un exemple, le module condenseur comprend :

- une entrée de la solution réfrigérante,

- une sortie de la solution réfrigérante,

- une entrée d'un quatrième fluide caloporteur extérieur, et

- une sortie du quatrième fluide caloporteur extérieur.

Selon un exemple, le module condenseur est configuré pour faire interagir thermiquement la solution réfrigérante et le quatrième fluide caloporteur extérieur de façon à condenser la solution réfrigérante.

Selon un exemple, l'entrée de la solution réfrigérante du module condenseur est fluidiquement connectée à la sortie de la solution réfrigérante du module rectifieur.

Selon un exemple, le module évaporateur comprend :

- une entrée de la solution réfrigérante,

- une sortie de la solution réfrigérante,

- une entrée d'un cinquième fluide caloporteur extérieur,

- une sortie du cinquième fluide caloporteur extérieur.

Selon un exemple, le module évaporateur est configuré pour faire interagir thermiquement la solution réfrigérante et le cinquième fluide caloporteur extérieur de façon à modifier, de préférence à diminuer, la température du quatrième fluide caloporteur extérieur par l'évaporation d'une partie au moins de la solution réfrigérante.

Selon un exemple, l'entrée de la solution réfrigérante du module évaporateur est fluidiquement connectée à la sortie de la solution réfrigérante du module condenseur, et la sortie de la solution réfrigérante du module évaporateur est fluidiquement connectée à l'entrée de la solution pauvre du module absorbeur.

Selon un exemple, dans la première configuration, la machine est configurée pour refroidir le cinquième fluide caloporteur extérieur.

Selon un exemple, dans la deuxième configuration, la machine est configurée pour augmenter la température d'au moins un parmi, et de préférence de chacun parmi, le premier fluide caloporteur extérieur et le quatrième fluide caloporteur extérieur.

Selon un exemple, dans la deuxième configuration, la machine est configurée pour augmenter la température d'au moins un parmi, et de préférence de chacun parmi, le premier fluide caloporteur extérieur, le troisième fluide caloporteur et le quatrième fluide caloporteur extérieur.

Selon un exemple, le premier fluide caloporteur extérieur et le quatrième fluide caloporteur extérieur forment un seul et même fluide caloporteur extérieur commun :

- la sortie du premier fluide caloporteur extérieur du module absorbeur étant fluidiquement connectée, de préférence directement, à l'entrée du quatrième fluide caloporteur extérieur du module condenseur et/ou

- l'entrée du premier fluide caloporteur extérieur du module absorbeur est fluidiquement connectée, de préférence directement, à la sortie du quatrième fluide caloporteur extérieur du module condenseur.

La récupération thermique de la machine absorption dans la configuration de production de chaleur est ainsi améliorée.

Selon un exemple, le premier fluide caloporteur extérieur, le troisième fluide caloporteur extérieur, et le quatrième fluide caloporteur extérieur forment un seul et même fluide caloporteur extérieur commun.

Selon un exemple, la sortie de la solution réfrigérante du module évaporateur est fluidiquement connectée à l'entrée de la solution pauvre du module absorbeur, la solution pauvre et la solution réfrigérante étant mélangées en amont ou au niveau de l'entrée de la solution pauvre du premier dispositif d'échange thermique.

Selon un exemple, la machine à absorption comprend en outre un deuxième dispositif d'échange thermique configuré pour faire interagir thermiquement la solution riche à partir de la température de la solution pauvre.

Selon un exemple, le deuxième dispositif d'échange thermique comprend :

- une entrée de la solution riche,

- une sortie de la solution riche,

- une entrée de la solution pauvre, et

- une sortie de la solution pauvre.

Selon un exemple, le deuxième dispositif d'échange thermique est configuré pour faire interagir thermiquement la solution riche avec la solution pauvre, de préférence pour faire augmenter la température de la solution riche à partir de la température de la solution pauvre.

Selon un exemple, l'entrée de la solution riche du deuxième dispositif d'échange thermique est fluidiquement connectée avec la sortie de la solution riche du premier dispositif d'échange thermique, et la sortie de la solution riche du deuxième dispositif d'échange thermique est fluidiquement connectée à l'entrée de la solution riche de la zone de distribution du système.

Selon un exemple, l'entrée de la solution pauvre du deuxième dispositif d'échange thermique est fluidiquement connectée avec la sortie de la solution pauvre du module générateur du système, et la sortie de la solution pauvre du deuxième dispositif d'échange thermique est fluidiquement connectée avec l'entrée de la solution pauvre du premier dispositif d'échange thermique.

Selon un exemple, le deuxième dispositif d'échange thermique comprend au moins un échangeur thermique à plaques.

Selon un exemple, la solution pauvre et la solution riche circulent à contre-courant dans l'échangeur thermique à plaques du deuxième dispositif d'échange thermique.

Selon un exemple, le module pré-rectifieur comprend :

- une entrée de la solution riche,

- une sortie de la solution riche.

Selon un exemple, le module pré-rectifieur est configuré pour faire interagir thermiquement la solution riche et le mélange issu de la zone de distribution, de façon à refroidir le mélange issu de la zone de distribution, et chauffer la solution riche.

Selon un exemple, l'entrée de la solution riche est fluidiquement connectée à la sortie de la solution riche du module absorbeur, et la sortie de la solution riche est fluidiquement connectée à l'entrée de la solution riche de la zone de distribution du système.

Selon un exemple, la sortie de la solution riche du module pré-rectifieur est fluidiquement connectée à l'entrée de la solution riche du premier dispositif d'échange thermique.

Selon un exemple, la machine comprenant le deuxième dispositif d'échange thermique, l'entrée de la solution riche du module pré-rectifieur est fluidiquement connectée à la sortie de la solution riche du premier dispositif d'échange thermique, et la sortie de la solution riche du module pré-rectifieur est fluidiquement connectée à l'entrée de la solution riche du deuxième dispositif d'échange thermique.

Selon un exemple, le troisième dispositif d'échange thermique comprend :

- une première entrée de la solution réfrigérante,

- une deuxième sortie de la solution réfrigérante,

- une deuxième entrée de la solution réfrigérante, et

- une deuxième sortie de la solution réfrigérante.

Selon un exemple, le troisième dispositif d'échange thermique est configuré pour faire interagir thermiquement la solution réfrigérante avant son entrée dans le module évaporateur avec la solution réfrigérante après sa sortie du module évaporateur.

Selon un exemple, la première entrée de la solution réfrigérante du troisième dispositif d'échange thermique est fluidiquement connectée à la sortie de la solution réfrigérante du module condenseur, et la première sortie de la solution réfrigérante du troisième dispositif d'échange thermique est fluidiquement connectée à l'entrée de la solution réfrigérante du module évaporateur.

Selon un exemple, la deuxième entrée de la solution réfrigérante du troisième dispositif d'échange thermique est fluidiquement connectée à la sortie de la solution réfrigérante du module évaporateur, et la deuxième sortie de la solution réfrigérante du troisième dispositif d'échange thermique est fluidiquement connectée à l'entrée de la solution pauvre du premier dispositif d'échange thermique.

Selon un exemple, le troisième dispositif d'échange thermique comprend au moins un échangeur thermique à plaques. Selon cet exemple, la solution réfrigérante sortant du module condenseur et la solution réfrigérante sortant du module évaporateur circulent à contre-courant dans l'échangeur thermique à plaques du troisième dispositif d'échange thermique.

Selon un exemple, la machine comprend en outre un dispositif d'augmentation de pression de la solution réfrigérante fluidiquement connecté entre la sortie de la solution réfrigérante du module évaporateur et l'entrée de la solution pauvre du premier dispositif d'échange thermique, de sorte à augmenter la pression du mélange de la solution pauvre avec la solution réfrigérante dans l'un au moins parmi le premier dispositif d'échange thermique, et le module absorbeur. Le dispositif d'augmentation de pression de la solution réfrigérante permet d'améliorer encore le coefficient de performance de la machine.

Selon un exemple, la machine comprend en outre au moins une première valve d'expansion comprenant :

- une entrée de la solution pauvre et

- une sortie de la solution pauvre.

Selon un exemple, la première valve d'expansion est configurée pour modifier la pression de la solution pauvre, de préférence pour modifier la pression de la solution pauvre par une détente isenthalpique,

Selon un exemple, l'entrée de la solution pauvre de la valve d'expansion est fluidiquement connectée à la sortie de la solution pauvre du module générateur, et de préférence à la sortie de la solution pauvre du deuxième dispositif d'échange thermique.

Selon un exemple, la machine comprend en outre au moins une deuxième valve d'expansion comprenant :

- une entrée de la solution réfrigérante et

- une sortie de la solution réfrigérante,

Selon un exemple, la deuxième valve d'expansion est configurée pour modifier la température de la solution réfrigérante, de préférence pour modifier la température de la solution réfrigérante (140) par une détente isenthalpique.

Selon un exemple, l'entrée de la solution réfrigérante de la deuxième valve d'expansion est fluidiquement connectée à la sortie de la solution réfrigérante du module condenseur, de préférence à la première sortie de la solution réfrigérante du troisième dispositif d'échange thermique, et la sortie de la solution réfrigérante est fluidiquement connectée à l'entrée de la solution réfrigérante du module évaporateur.

Selon un exemple, la machine comprend en outre une pompe à solution comprenant :

- une entrée de la solution riche, et

- une sortie de la solution riche.

Selon un exemple, la pompe à solution est configurée pour modifier la pression de la solution riche, de préférence pour augmenter la pression de la solution riche.

Selon un exemple, l'entrée de la solution riche de la pompe à solution est fluidiquement connectée à la sortie de la solution riche du module absorbeur, et la sortie de la solution riche de la pompe à solution est fluidiquement connectée à l'entrée de la solution riche du premier dispositif d'échange thermique.

Il est précisé que dans le cadre de la présente invention, l'expression « A fluidiquement connecté à B » ou encore « A fluidiquement raccordé à B » est synonyme de « A est en connexion fluidique avec B » et ne signifie pas nécessairement qu'il n'existe pas d'organe entre A et B. Ainsi ces expressions s'entendent d'une connexion fluidique entre deux éléments, cette connexion pouvant ou non être directe, cela signifie qu'il est possible qu'entre un premier dispositif et un deuxième dispositif qui sont fluidiquement connectés, un parcours d'un fluide existe, ce parcours pouvant ou non comprendre d'autres dispositifs.

A l'inverse, dans le cadre de la présente invention, le terme «fluidiquement connecté directement» s'entend d'une connexion fluidique directe entre deux éléments. Cela signifie qu'entre un premier dispositif et un deuxième dispositif qui sont fluidiquement connectés directement aucun autre organe n'est présent, autre qu'un conduit ou plusieurs conduits.

Il est précisé que dans le cadre de la présente invention, le terme « fluidiquement disposé » s'entend d'un positionnement d'un dispositif sur le parcours d'un fluide.

Par « échangeur à plaques en spirale » on entend un échangeur thermique comprenant au moins une plaque métallique enroulée, par exemple de façon hélicoïdale, autour d'un axe central de l'échangeur thermique. De préférence, l'échangeur thermique comprend deux plaques métalliques enroulées, par exemple de façon hélicoïdale, l'une par rapport à l'autre.

Par fluide « extérieur » on entend un fluide distinct, en termes de circulation fluidique, du premier et du deuxième fluide.

Un aspect de l'invention concerne ainsi une machine à absorption, dans laquelle circule un mélange en un premier fluide et un deuxième fluide, apte à délivrer de la chaleur et/ou du froid en fonction de sa configuration.

Pour rappel l'effet utile dans le cas d'une machine frigorifique est le flux $Q_E$ cédé par le fluide froid, et plus particulièrement par le fluide caloporteur du module évaporateur. En configuration pompe à chaleur l'effet utile est le flux de chaleur cédé par la machine à un fluide extérieur qui se chauffe. Par exemple, l'effet utile comprend ou est la somme de $Q_A$ et Qc, les deux flux de chaleur cédés par la machine à un fluide extérieur qui se chauffe, et plus particulièrement les flux cédés au fluide caloporteur du module absorbeur et au fluide du module condenseur, pouvant former un seul et même fluide caloporteur.

Le coût, voire la dépense énergétique nécessaire au roulement de la machine, est constitué par $Q_G$ et $W_P$, respectivement l'énergie thermique à haute température destinée au générateur et l'énergie électrique nécessaire à la pompe à solution. Étant deux sources d'énergie différentes et non-comparables il faut différencier entre un coefficient de performance (abrégé COP), le $COP_{TH}$ thermique et le $COP_{EL}$ électrique. On définit dans la suite COP comme le $COP_{TH}$ thermique.

Par exemple, en fonctionnement pour la production de froid au module évaporateur :

$$COP_{TH} = Q_E \, / \, Q_G.$$

Par exemple, en fonctionnement pour la production de chaleur à l'absorbeur et au condenseur:
$COP_{TH} = (Q_A + Qc)/ Qc$.

En particulier, la présente invention permet de réaliser au moins un cycle thermodynamique d'absorption de type GAX tout en présentant des avantages à la fois en termes de performances mais également de coût et d'encombrement.

En effet, contrairement à l'art antérieur qui utilise des dispositifs encombrants et verticaux, en particulier des colonnes pourvues d'échangeur à film ou à serpentins qui s'étendent principalement selon la verticale, la présente solution utilise une technologie beaucoup plus compacte et minimisant le nombre de modules et/ou d'élément de la machine.

Pour cela, on prévoit un système de génération et de rectification de vapeur dans lequel les échanges thermiques sont notamment réalisés grâce à des échangeurs à plaques en spirales. Les échangeurs à plaques en spirales permettent d'augmenter la surface d'échange thermique et d'améliorer la séparation de phase entre le premier fluide et le deuxième fluide circulant, sans nécessiter d'élément supplémentaires tels que des bouteilles de séparation.

Les différents éléments compris dans le système de génération et de rectification de vapeur, puis les éléments compris dans la machine à absorption sont décrits, avant de décrire le circuit des solutions dans la machine.

### 1) Système de génération et de rectification de vapeur

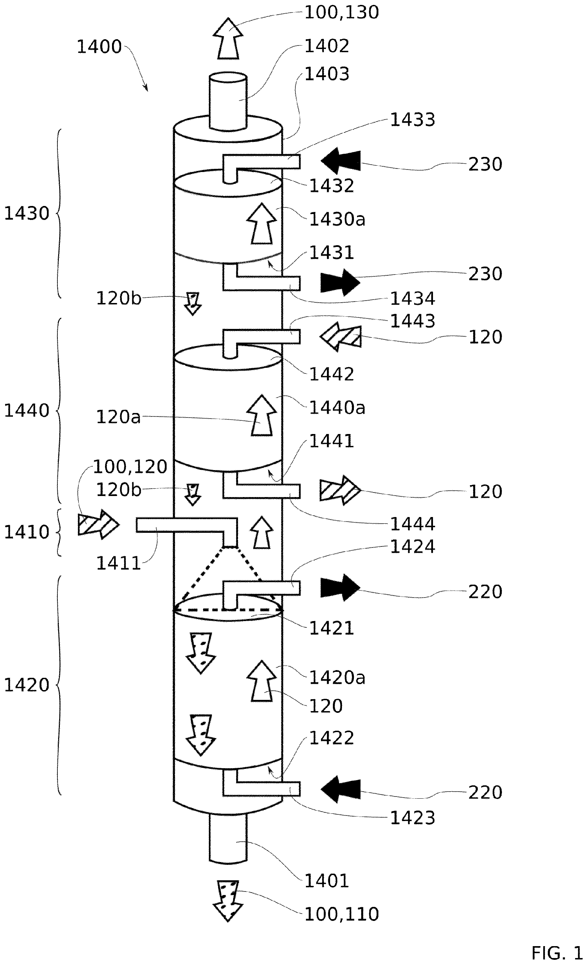

Le système 1400 de génération et de rectification de vapeur est tout d'abord décrit selon un exemple de réalisation illustré par les figures 1 à 3A.

Comme par exemple illustré en figure 1, le système 1400 comprend une zone de distribution 1410, un module générateur 1420 (aussi désigné générateur) et un module rectifieur 1430 (aussi désigné rectifieur). Le système 1400 est configuré pour recevoir une solution riche 120 dans deuxième fluide, décrite plus en détail ultérieurement, et, par des échanges thermiques successifs, séparer la solution riche 120 en une solution pauvre 110 en deuxième fluide et une solution réfrigérante 130, de préférence la plus concentrée possible en deuxième fluide.

Pour cela, le système 1400 comprend une zone de distribution 1410 présentant une entrée 1411 destinée à être raccordée à un circuit de circulation d'une machine à absorption. Ainsi la solution riche 120 entre dans le système 1400 au niveau de la zone de distribution 1410.

Le système comprend en outre un module générateur 1420 (aussi appelé générateur) et un module rectifieur 1430 (aussi appelé rectifieur), ces modules étant disposés de part et d'autre de la zone de distribution 1410, en projection sur un axe sensiblement vertical. Comme par exemple illustré en figure 1, le module générateur 1420 est spatialement disposé sous la zone de distribution 1410, et le module rectifieur 1430 est spatialement disposé au-dessus de la zone de distribution 1410. Plus particulièrement, le système 1400 peut comprendre une colonne formée d'une paroi délimitant un volume fermé, par exemple cylindrique, comprenant la zone 1410, le module générateur 1420 et le module rectifieur 1430.

Le module générateur 1420 est configuré pour chauffer le mélange 100 issu de la zone de distribution 1410, de façon à l'évaporer partiellement. Pour cela, le module générateur 1420 comprend un passage de circulation d'un fluide caloporteur extérieur 220, et comprend une entrée 1423 et une sortie 1423 du fluide caloporteur extérieur 220. Le fluide caloporteur présente de préférence une température supérieure à la température du mélange 100 issu de la zone de distribution 1410.

Le module rectifieur 1430 est configuré pour refroidir le mélange 100 issu de la zone de distribution 1410. Pour cela, le module rectifieur 1430 comprend un passage de circulation d'un fluide caloporteur extérieur 230, comprenant une entrée 1433 et une sortie 1433 du fluide caloporteur 230. Le fluide caloporteur 230 présente de préférence une température inférieure à la température du mélange 100 issu de la zone de distribution 1410.

La solution riche 120 entre ainsi dans la zone de distribution 1410, et tombe au moins en partie dans le module générateur 1420. La solution étant chauffée, elle s'évapore au moins en partie sous forme de vapeur 120a, décrit plus en détail ci-dessous relativement au fonctionnement des échangeurs à plaques en spirale. Les vapeurs 120a ont une concentration plus grande en deuxième fluide. Ce qui n'est pas évaporé au niveau du module générateur 1420 sort par la sortie 1401 du système, de façon équivalente la sortie 1422 du module générateur 1420, pour former la solution pauvre 110.

Les vapeurs chauffées par le module générateur 1420 remontent à la zone de distribution 1410 et permettent de chauffer la solution riche, pour amorcer la séparation de phase dès la zone de distribution 1410.

Les vapeurs 120a issues du module générateur 1420 et de la zone de distribution 1410 entrent ensuite dans le module rectifieur 1430. Le module rectifieur 1430 est configuré pour refroidir les vapeurs 120a de sorte qu'une partie riche en premier fluide condense sous forme de condensat 120b, et que la partie restante de vapeur sorte du système 1400 par la sortie 1402, ou de façon équivalente par la sortie 1432 du module rectifieur 1430, pour former la solution réfrigérante 130.

Le condensat 120b s'écoule dans la zone de distribution 1410 et il se mélange à la solution riche 120, puis il s'écoule dans le module générateur 1420, dans lesquels il est soumis aux échanges thermiques décrits ci-dessus.

On comprend donc que, depuis le module générateur 1420 jusqu'au module rectifieur 1430, des échanges thermiques successifs ont lieu de façon à enrichir progressivement les vapeurs 120a en deuxième fluide, et à appauvrir progressivement la solution riche 120 et le condensat 120b en deuxième fluide.

Afin d'améliorer encore les échanges thermiques et la séparation de phase, le système 1400 peut comprendre en outre un module pré-rectifieur 1440 (aussi désigné pré-rectifieur). Comme par exemple illustré en figure 1, le module pré-rectifieur 1440 peut être disposé entre la zone de distribution 1410 et le module rectifieur 1430. Le module pré-rectifieur peut être configuré pour refroidir le mélange issu de la zone de distribution 1410 avant son entrée dans le module rectifieur 1430. Ainsi, un niveau supplémentaire d'échange thermique est ajouté au système 1400, ce qui permet d'améliorer encore les échanges thermiques et la séparation de phase. La solution réfrigérante obtenue 130 peut ainsi présenter une concentration supérieure en deuxième fluide par rapport à un système 1400 sans module pré-rectifieur. Une machine à absorption comprenant un système 1400 avec le module pré-rectifieur 1440 présentera un coefficient de performance plus élevé.

Pour cela, le module pré-rectifieur 1440 comprend un passage de circulation d'un fluide caloporteur, comprenant une entrée 1443 et une sortie 1443 du fluide caloporteur. Le fluide caloporteur présente de préférence une température inférieure à la température du mélange 100 issu de la zone de distribution 1410. Le fluide caloporteur présente de préférence une température supérieure à la température du fluide caloporteur 230 du module rectifieur 1430. Selon un exemple, détaillé ultérieurement, le fluide caloporteur dans le module pré-rectifieur 1440 peut être la solution riche 120, préalablement à son introduction dans le système 1400. Ainsi, l'échange thermique dans le module pré-rectifieur 1440 permet de récupérer l'énergie du mélange 100 circulant dans le module pré-rectifieur 1440 afin d'augmenter la température de la solution riche 120. L'apport d'énergie externe est ainsi limité.

Notons qu'on peut prévoir que le fluide caloporteur 230 du module rectifieur 1430 soit la solution riche 120, notamment lorsque le système ne comprend pas de module pré-rectifieur 1440. En alternative le fluide caloporteur 230 du module rectifieur 1430 peut être un fluide caloporteur externe, et donc distinct de la solution riche 120,

Le système 1400 peut comprendre une enveloppe 1403 s'étendant entre les sorties 1401 et 1402 et définissant un volume intérieur. Selon un exemple, l'enveloppe 1403 contient le module générateur 1420, le module rectifieur 1430 et le cas échéant le module pré-rectifieur 1440. L'enveloppe 1403 forme notamment une colonne.

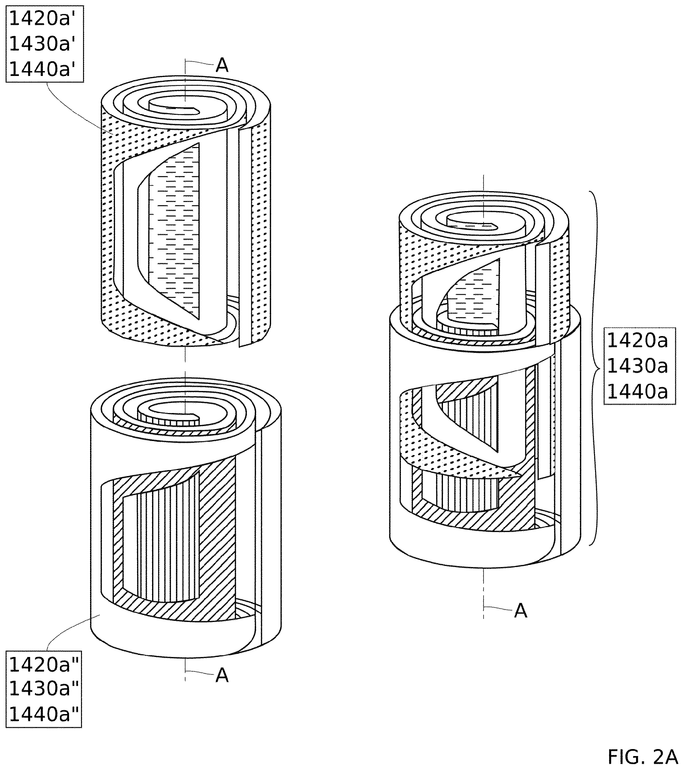

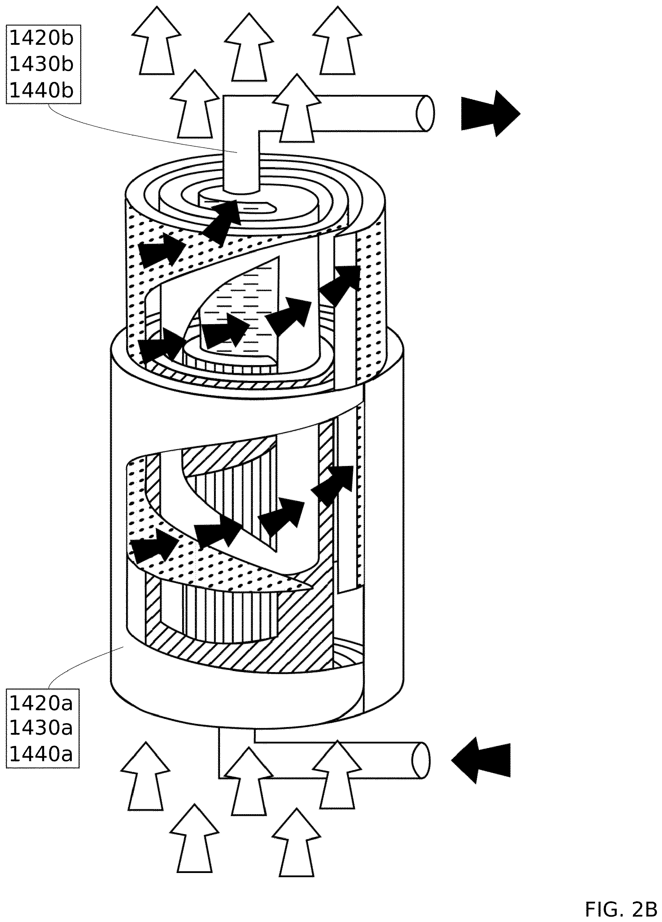

Le module générateur 1420, le module rectifieur 1430 et le cas échéant le module pré-rectifieur 1440 comprennent chacun au moins un échangeur à plaques en spirale 1420a, 1430a, 1440a. Comme par exemple illustré par les figures 2A et 2B, un échangeur à plaques en spirale comprend au moins une et de préférence deux plaques 1420a', 1430a', 1440a' et 1420a", 1430a", 1440a" enroulée(s), par exemple de façon hélicoïdale, autour d'un axe central A. Les deux plaques peuvent être enroulées coaxialement l'une avec l'autre. L'enroulement de chaque plaque crée un canal concentrique le long de l'échangeur. Une plaque peut s'insérer au moins partiellement dans l'autre plaque pour former le corps de l'échangeur 1420a, 1430a, 1440a. L'échangeur 1420a, 1430a, 1440a peut en outre comprendre un passage de circulation 1420b, 1430b, 1440b, d'un fluide caloporteur, par exemple sous la forme d'un tuyau au contact d'au moins une des plaques. De préférence le passage de circulation 1420b, 1430b, 1440b s'étend dans l'échangeur selon une direction sensiblement parallèle, et de préférence confondue, avec l'axe central A.

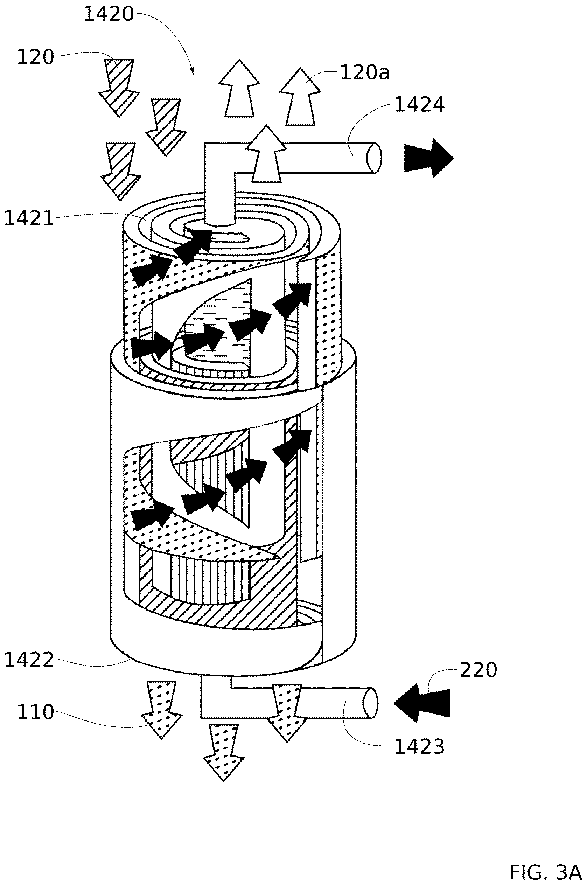

Le fonctionnement du module générateur 1420 avec son échangeur à plaque 1420a est maintenant décrit à titre d'exemple en référence à la figure 3A. Comme décrit précédemment, un fluide caloporteur 220 circule, de préférence à contre-courant du mouvement du mélange 100 de la zone de distribution 1410 vers le module générateur 1420, dans l'échangeur 1420a pour augmenter par échange thermique la température du mélange présent dans le module générateur 1420. Le mélange 100 provenant de la zone de distribution 1410 entre par l'entrée 1421 du générateur 1420. L'entrée 1421 est en connexion fluidique, et de préférence en connexion fluidique directe, avec la zone de distribution 1410. Le mélange 100 est donc chauffé dans l'échangeur 1420a par échange thermique avec le fluide caloporteur 220. De la vapeur 120a s'évapore pour remonter vers la zone de distribution 1410, tandis que la solution qui s'appauvrit ruisselle contre les plaques de l'échangeur 1420a pour sortir par la sortie 1422 et former la solution pauvre 110. Le module générateur 1420 peut être configuré pour fonctionner à haute pression, c'est-à-dire à une pression supérieure à 30 bar. Le module générateur peut en outre être configuré pour chauffer la solution pauvre 110 à haute température, c'est-à-dire à une température jusqu'à 200°C.

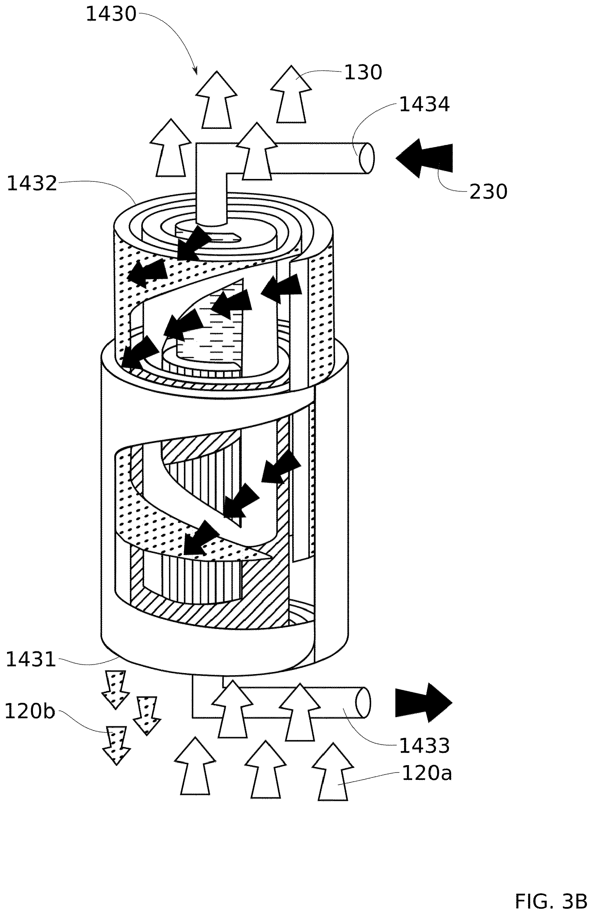

Le fonctionnement du module rectifieur 1430 avec son échangeur à plaque 1430a est maintenant décrit à titre d'exemple en référence à la figure 3B. Notons que cela s'applique aussi au module pré-rectifieur 1440. Comme décrit précédemment, un fluide caloporteur 230 de refroidissement circule dans l'échangeur 1430a, de préférence à contrecourant avec la progression de la vapeur 120a de la zone de distribution 1410 vers le module rectifieur 1430, pour diminuer par échange thermique la température du mélange présent dans le module rectifieur 1430. Le mélange 100 issu de la zone de distribution 1410, et notamment les vapeurs 120a, entre par l'entrée 1431. L'entrée 1431 est en connexion fluidique, et de préférence en connexion fluidique directe, avec la zone de distribution 1410. Le mélange 100 est donc refroidit dans l'échangeur par échange thermique avec le fluide caloporteur 230. Un condensat 120b se forme et ruisselle le long des plaques pour circuler dans la colonne en direction de la zone de distribution 1410 puis du module générateur 1420. Ce qui reste sous forme vapeur 120a remonte pour sortir par la sortie 1432 et former la solution réfrigérante 130.

Le mélange 100 en circulation dans le système est maintenant décrit. Ce mélange en circulation 100 comprend au moins un premier fluide et un deuxième fluide. Ce premier fluide peut être pris parmi au moins : de l'eau, ou un solvant comme le lithium nitrate ou le thiocyanate de sodium, ou encore un mélange d'eau et nitrate de lithium. Ce deuxième fluide peut être de préférence pris parmi au moins : de l'ammoniac, ou de l'alcool. De préférence, le premier fluide est de l'eau et le deuxième fluide est de l'ammoniac.

Selon un exemple, la proportion massique du premier fluide est comprise entre 30% et 70%, de préférence entre 40% et 60%, et avantageusement entre 45% et 55%.

Selon un exemple, la proportion massique du deuxième fluide est comprise entre 30% et 70%, de préférence entre 40% et 60%, et avantageusement entre 45% et 55%.

De manière astucieuse, et comme on le comprend de la description qui précède, la concentration du deuxième fluide dans le mélange 100 en circulation est variable durant la circulation dudit mélange 100 dans le système 1400 et dans la machine 1000. En effet, et tel que décrit plus en détail par la suite, le mélange 100 en circulation présente différents taux de concentration du deuxième fluide dans le premier fluide en fonction de sa position dans le système 1400 et la machine 1000.

Ainsi, le mélange 100 en circulation peut présenter, sous la forme d'une solution pauvre 110, un premier taux de concentration du deuxième fluide. De préférence, la solution pauvre 110 contient ainsi très peu du deuxième fluide. Selon un mode de réalisation, la solution pauvre 110 comprend une concentration massique en deuxième fluide inférieure à 70 %, de préférence à 50 % et plus préférentiellement encore à 20 %.

Le mélange 100 en circulation peut également présenter, sous la forme d'une solution riche 120, un deuxième taux de concentration du deuxième fluide. Selon un mode de réalisation, la solution riche 120 peut présenter une partie gazeuse en un ou plusieurs points du circuit de circulation de la machine 1000, par exemple lors de son passage ou en sortie du premier dispositif d'échange thermique 1200. La solution riche 120 peut comprendre un taux de concentration massique en deuxième fluide différent, et plus particulièrement supérieur, au taux de concentration massique en deuxième fluide de la solution pauvre 110. De manière avantageuse, la solution riche 120 comprend une concentration massique en deuxième fluide comprise entre 30 % et 80 %, de préférence entre 40 % et 70 %, et avantageusement entre 45 % et 65 %.

Le mélange 100 en circulation peut en outre présenter, sous la forme d'une solution réfrigérante 130, un troisième taux de concentration du deuxième fluide. De préférence, la solution réfrigérante 130 comprend principalement le deuxième fluide. La solution réfrigérante 130 peut présenter un état gazeux et/ou liquide. Selon un exemple, la solution réfrigérante 130 présente une concentration massique en deuxième fluide supérieure à la concentration massique en deuxième fluide de la solution riche 120. Selon un mode de réalisation, la solution réfrigérante 130 comprend une concentration massique en deuxième fluide sensiblement supérieure à 85 %, de préférence à 90 %, de préférence à 96 % et plus préférentiellement encore à 98 %.

Dans la présente description, on considère une haute température comme étant la température maximale que peut atteindre le mélange 100 lors d'un cycle thermodynamique mis en oeuvre par la machine 1000. De préférence, cette haute température est sensiblement supérieure à 80°C, de préférence à 130 °C, plus préférentiellement à 160°C.

Dans la présente description, on considère une haute pression comme étant la pression maximale que peut atteindre le mélange 100 lors d'un cycle thermodynamique mis en oeuvre par la machine 1000. En mode de chauffage, pour une production de chaleur en sortie absorbeur/condenseur à une température > 65°C, de préférence, cette haute pression est supérieure à 20 bar, avantageusement à 25 bar.

Dans la présente description, on considère une basse température comme étant la température minimale que peut atteindre le mélange 100 lors d'un cycle thermodynamique mis en oeuvre par la machine 1000. En mode de production de froid, de préférence, cette basse température est inférieure à 15°C, éventuellement à -35°C notamment en cas de besoin de froid négatif.

Dans la présente description, on considère une basse pression comme étant la pression minimale que peut atteindre le mélange 100 lors d'un cycle thermodynamique mis en oeuvre par la machine 1000. En mode de production de froid, de préférence, la basse pression est inférieure à 7 bar, avantageusement inférieur à 4 bar pour une production de froid à température inférieure à 15°C (1 bar étant égal à 1000 hPa dans les unités du système international).

### 2) Machine à absorption

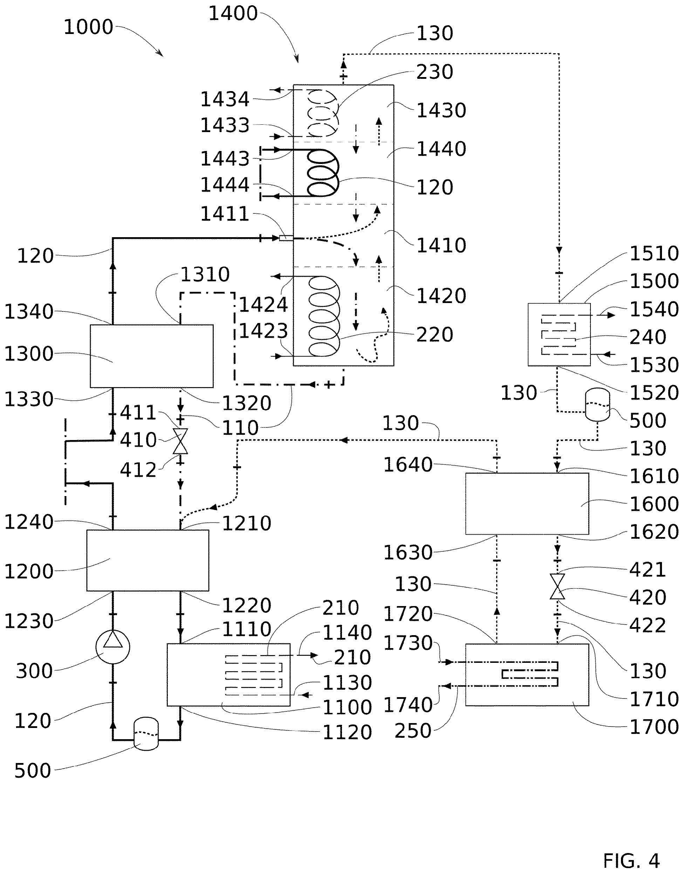

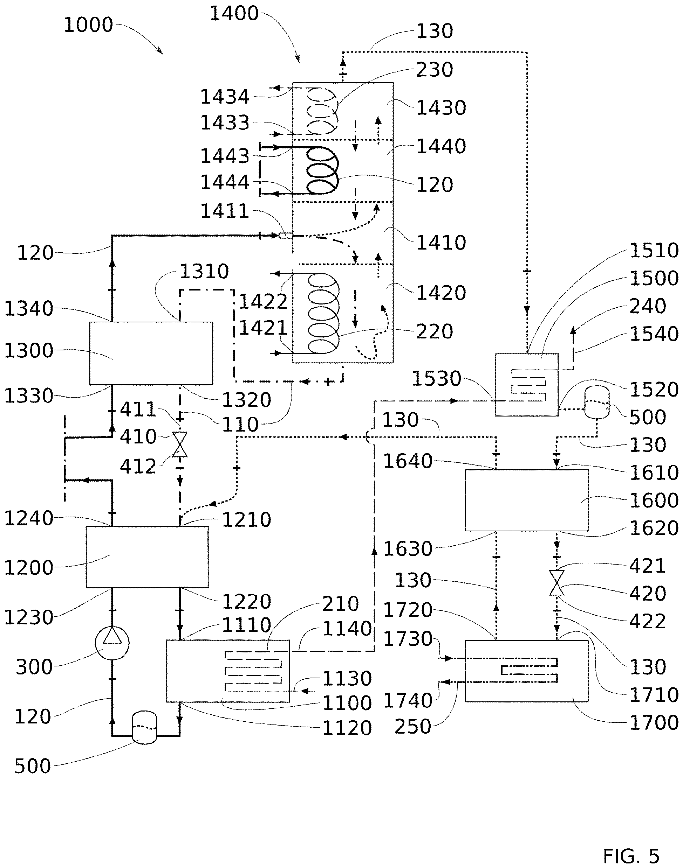

La machine 1000 à absorption est maintenant décrite selon deux exemples de réalisation, en référence aux figures 4 et 5. La machine 1000 présente une première configuration et une deuxième configuration.

Dans la première configuration, illustrée par exemple par la figure 4, la machine 1000 est configurée pour produire du froid. Cette production de froid est de préférence réalisée au moyen de la diminution de la température d'au moins un fluide caloporteur, et plus particulièrement du fluide caloporteur du module évaporateur 1700.

Dans la deuxième configuration, par exemple illustrée par la figure 5, la machine 1000 est configurée pour produire de la chaleur. Cette production de chaleur est de préférence réalisée au moyen de l'augmentation de la température d'au moins un fluide caloporteur et plus particulièrement du fluide caloporteur du module absorbeur 1100 et le fluide caloporteur du module condenseur 1500. Selon un exemple, le fluide caloporteur du module absorbeur 1100 et le fluide caloporteur du module condenseur 1500 peuvent former un seul et même fluide, comme illustré en figure 5.

Tel que décrit par la suite et aux travers des figures 4 et 5, la machine 1000 peut comprendre :

- un module absorbeur (aussi désigné par absorbeur) 1100,

- un premier dispositif d'échange thermique 1200,

- de préférence, un deuxième dispositif d'échange thermique 1300,

- le système 1400 de génération et de rectification de vapeur,

- un module condenseur (aussi désigné par condenseur) 1500,

- de préférence, un troisième dispositif d'échange thermique 1600,

- un module évaporateur (aussi désigné par évaporateur) 1700,

- de préférence, une pluralité de valves d'expansion 410 et 420,

- de préférence, au moins une bouteille de stockage 500,

- de préférence, au moins une pompe à solution 300.

L'agencement et la coopération entre ces éléments est maintenant décrit.

L'absorbeur 1100 est configuré pour faire interagir thermiquement la solution pauvre 110 et le premier fluide caloporteur extérieur 210 de façon à transformer la solution pauvre 110 en solution riche 120. Pour cela, la solution pauvre 110 peut être en mélange avec la solution réfrigérante 130 au niveau du module absorbeur 1100, le mélange pouvant plus particulièrement être sous forme diphasique. La température de la solution pauvre 110 peut être diminuée par interaction avec le fluide caloporteur 210. Cette diminution de la température permet alors d'augmenter le taux de concentration massique du deuxième fluide par absorption de la solution réfrigérante 130 dans la solution pauvre 110. La solution pauvre 110 se transforme alors en solution riche 120.

En particulier, la quantité du deuxième fluide absorbé est directement liée au rendement d'absorption se produisant dans l'absorbeur 1100. Par exemple, la solution riche 120 en sortie de l'absorbeur 1100 présente une concentration massique en deuxième fluide 1,5 fois supérieure, de préférence 3 fois supérieurs à la concentration massique en deuxième fluide de la solution pauvre 110 en entrée de l'absorbeur 1100.

En sortie de l'absorbeur 1100, la solution riche 120 est donc plus froide que la solution pauvre 110 en entrée, une partie de cette chaleur ayant été cédée au premier fluide caloporteur extérieur 210. Ainsi le premier fluide caloporteur extérieur 210 entre dans l'absorbeur 1100 à une température inférieure à celle avec laquelle il ressort de l'absorbeur 1100.

Selon un exemple privilégié, l'absorbeur 1100 comprend un échangeur thermique à plaques, décrit plus en détail ultérieurement.

Pour cela, l'absorbeur 1100 peut comprendre au moins :

- une entrée 1110 de la solution pauvre 110, la solution pauvre 110 présentant une première température,

- une sortie 1120 de la solution riche 120, la solution riche 120 présentant une deuxième température inférieure à la première température,

- une entrée 1130 d'un premier fluide caloporteur extérieur 210, et

- une sortie 1140 du premier fluide caloporteur extérieur 210.

L'entrée 1110 de la solution pauvre 110 de l'absorbeur 1100 peut être fluidiquement connectée, de préférence directement, à une sortie 1220 de la solution pauvre 110 du premier dispositif d'échange thermique 1200.

La sortie 1120 de la solution riche 120 de l'absorbeur 1100 peut être fluidiquement connectée, de préférence directement, à une entrée 1230 de la solution riche 120 du premier dispositif d'échange thermique 1200.

La machine 1000 peut comprendre en outre un dispositif d'augmentation de pression, non illustré sur les figures, apte à modifier la pression du mélange en circulation 100 dans l'absorbeur 1100 de manière à augmenter la concentration massique en deuxième fluide de la solution riche 120 lors de la transformation de la solution pauvre 110 en solution riche 120. Ce dispositif d'augmentation de pression peut par exemple être disposé en entrée de l'absorbeur 1100, ou en entrée du premier dispositif d'échange thermique 1200, ou en sortie du troisième dispositif d'échange thermique 1600, selon le sens de circulation de la solution pauvre et/ou de la solution réfrigérante 130. Ce dispositif d'augmentation de pression peut par exemple être un compresseur ou bien encore un éjecteur. De préférence, ce dispositif d'augmentation de pression est disposé entre la deuxième sortie 1640 de la solution réfrigérante 130 du troisième dispositif d'échange thermique 1600 et l'entrée 1210 de la solution pauvre 110 du premier dispositif d'échange thermique 1200. Cela permet d'avoir une solution plus chaude en entrée du premier dispositif d'échange thermique 1200. Cela permet également d'avoir une pression du mélange 100 plus importante dans l'absorbeur 1100. En outre, la solution pauvre n'est ainsi pas perturbée avant sa phase de détente isenthalpique produite par la première valve d'expansion 410. Le COP est donc amélioré.

Le premier dispositif d'échange thermique 1200 peut être configuré pour faire interagir thermiquement la solution riche 120 avec la solution pauvre 110, le cas échéant avec un mélange de la solution pauvre 110 et de la solution réfrigérante 130. Cette interaction thermique est destinée à modifier la température de la solution riche 120 et de la solution pauvre 110. En particulier, le premier dispositif d'échange thermique 1200 est configuré pour augmenter la température de la solution riche 120. De préférence, le premier dispositif d'échange thermique 1200 est configuré pour diminuer la température de la solution pauvre 110.

Le premier dispositif d'échange thermique 1200 peut être configuré pour recevoir la solution riche 120, de préférence à une première température et à une première pression. Cette première température est par exemple dite froide, et peut être inférieure à la température de la solution pauvre 110 en entrée du premier dispositif d'échange thermique 1200. Cette première pression est une haute pression, et peut être supérieure à la pression de la solution pauvre 110 en entrée du premier dispositif d'échange thermique 1200.

De manière avantageuse, le mélange de la solution pauvre 110 et de la solution réfrigérante 130 est un mélange diphasique comprenant une phase liquide et une phase gazeuse. La rencontre de la solution pauvre 110 avec la solution réfrigérante 130 génère une réaction exothermique, augmentant sa température avant récupération par échange thermique par la solution riche 120. Ce mélange est à une pression inférieure à la pression de la solution riche 120 à son entrée dans le premier dispositif d'échange thermique. De préférence, la solution riche 120 et ce mélange se déplacent dans le premier dispositif d'échange thermique à contre-courant. En particulier, la solution pauvre 110 et la solution réfrigérante 130 sont en co-courant alors que la solution riche 120 est à contre-courant par rapport à la solution pauvre 110 et à la solution réfrigérante 130. De préférence, le premier dispositif d'échange thermique 1200 comprend au moins un échangeur à plaque.

Le transfert thermique depuis le mélange des solutions pauvre 110 et réfrigérante 130 vers la solution riche 120 est de préférence fait par un échangeur à plaque du premier dispositif 1200. Ainsi la solution riche 120 sort du premier dispositif d'échange thermique 1200 à une température supérieure à celle à laquelle elle est entrée dans le premier dispositif d'échange thermique 1200.

La solution pauvre 110 mélangée à la solution réfrigérante 130 sort du premier dispositif d'échange thermique 1200 à une température inférieure à la température à laquelle elle est entrée dans le premier dispositif d'échange thermique 1200.

Pour cela, le premier dispositif d'échange thermique 1200 peut comprendre au moins :

- une entrée 1210 de la solution pauvre 110,

- une sortie 1220 de la solution pauvre 110,

- une entrée 1230 de la solution riche 120, et

- une sortie 1240 de la solution riche 120.

L'entrée 1230 de la solution riche 120 du premier dispositif d'échange thermique est fluidiquement connectée à la sortie 1120 de la solution riche 120 de l'absorbeur 1100, de préférence par l'intermédiaire de la pompe à solution 300.

L'entrée 1210 de la solution pauvre 110 peut être fluidiquement connectée à la sortie 1422 du module générateur 1420, de préférence par l'intermédiaire du deuxième dispositif d'échange thermique puis de la valve d'expansion 410, comme décrit plus loin. L'entrée 1210 de la solution pauvre 110 peut être en outre fluidiquement connectée à la sortie 1720 du module évaporateur 1700, de préférence par l'intermédiaire du troisième dispositif d'échange thermique 1600. L'entrée 1210 du premier dispositif d'échange thermique 1200 peut ainsi permettre un mélange entre la solution pauvre 110 et la solution réfrigérante 130.

La sortie 1220 de la solution pauvre 110 peut être fluidiquement connectée, de préférence directement, à l'entrée 1110 de la solution pauvre 110 de l'absorbeur 1100.

Un échangeur à plaques est brièvement décrit. Un échangeur à plaques comprend des plaques, typiquement superposées et arrangées de façon parallèle les uns aux autres, séparant au moins deux circuits de circulation de fluides, de préférence en contre-courant, cela afin d'améliorer les échanges thermiques. Lors de la circulation de deux fluides dans l'échangeur à plaques, des échanges thermiques se produisent via les plaques de l'échangeur à plaques, l'énergie thermique étant ensuite transmise par le biais des plaques à un fluide caloporteur.

Dans le premier dispositif d'échange thermique, il peut se produire une absorption de la vapeur de la solution réfrigérante 130 dans la phase liquide de la solution pauvre 110, notamment dans la partie basse pression du premier dispositif d'échange thermique 1200. Et de manière parallèle, on retrouve une évaporation d'une partie au moins de la solution riche 120, en particulier d'une partie au moins du deuxième fluide de la solution riche 120 dans la partie haute pression du premier dispositif d'échange thermique 1200.

Selon un exemple de réalisation, l'absorbeur 1100 et le premier dispositif d'échange thermique 1200 peuvent former un seul et même élément de la machine.

Selon un exemple, le premier dispositif d'échange thermique 1200 peut être configuré pour que la solution pauvre 110 soit en contre-courant avec la solution réfrigérante 130 ou à semi-contre-courant avec la solution réfrigérante 130. Cela permet d'améliorer l'absorption. Cela permet en outre d'améliorer le transfert thermique entre ledit mélange et la solution riche 120.

L'utilisation d'un ou de plusieurs échangeurs thermiques à plaques configurés pour qu'une phase gazeuse et une phase liquide circulent en contre-courant l'une relativement à l'autre permet une amélioration du transfert thermique et de l'absorption. En effet, si la phase gazeuse, c'est-à-dire la solution réfrigérante 130, est injectée en contre-courant par rapport à la phase liquide, c'est-à-dire à la solution pauvre 110, alors l'absorption du deuxième fluide est améliorée tout comme le transfert thermique entre le mélange formée par la solution réfrigérante 130 et la solution pauvre 110, et la solution riche 120. Selon ce mode de réalisation, l'échangeur à plaques peut comprendre un ou des injecteurs au fond de chaque canal de circulation de la solution pauvre 110, c'est-à-dire dans les canaux à basse pression.

La pompe à solution 300 peut être configurée pour modifier la pression de la solution riche 120, de préférence pour augmenter la pression de la solution riche 120. En particulier, la pompe à solution 300 assure la mise en circulation du mélange 100 dans la machine 1000. La pompe à solution 300 amène la solution riche 120 de préférence à la haute pression.

Pour cela, la pompe à solution 300 peut être disposée fluidiquement entre l'absorbeur 1100 et le premier dispositif d'échange de chaleur 1200 relativement à la circulation de la solution riche 120. Pour cela, l'entrée de la solution riche 120 de la pompe à solution 300 peut être fluidiquement connectée, de préférence directement, à la sortie 1120 de la solution riche 120 de l'absorbeur 1100. La sortie de la solution riche 120 de la pompe à solution 300 peut être fluidiquement connectée, de préférence directement, à l'entrée 1230 de la solution riche 120 du premier dispositif d'échange thermique 1200.

Une bouteille de stockage 500 peut en outre être disposée fluidiquement entre l'absorbeur 1100 et le premier dispositif d'échange thermique 1200, de préférence l'absorbeur 1100 et la pompe à solution 300.

Le deuxième dispositif d'échange thermique 1300 peut être configuré pour faire interagir thermiquement la solution riche 120 avec la solution pauvre 110. De préférence, le deuxième dispositif d'échange thermique 1300 est configuré pour faire augmenter la température de la solution riche 120 et pour faire diminuer la température de la solution pauvre 110 issue du module générateur 1420. Ainsi, le deuxième dispositif d'échange thermique 1300 permet le transfert thermique entre la solution pauvre 110 qui se trouve à haute température et la solution riche 120 qui se trouve à une température inférieure à cette haute température. La solution riche 120 devient alors en partie au moins diphasique tout au long de son passage dans le deuxième dispositif d'échange thermique 1300. De manière astucieuse, les fluides en circulation dans le deuxième dispositif d'échange thermique 1300 sont en contre-courant. Dans le deuxième dispositif d'échange thermique 1300, la solution riche 120 et la solution pauvre 110 sont de préférence à la même pression.

Le deuxième dispositif d'échange thermique 1300 comprend de préférence au moins un échangeur thermique à plaques.

Grâce au deuxième dispositif d'échange thermique 1300, la solution riche 120, avant son entrée dans le système 1400, peut être encore chauffée par la solution pauvre 110. Cela permet une meilleure récupération de la chaleur, de préférence à une valeur la plus haute possible. Cet échange thermique se produit alors à une température élevée et présente des avantages en termes d'irréversibilité. Les températures impliquées dans cet échange thermique sont toutes les deux élevées, et relativement proches l'une de l'autre. Cela permet d'utiliser les températures en sortie de cet échange thermique pour réaliser d'autres échanges thermiques. Par exemple, la température la plus froide de la solution pauvre 110, en sortie du deuxième dispositif 1300 reste suffisamment chaude pour être refroidie au moins une nouvelle fois lors d'un échange thermique à venir, par exemple dans le premier dispositif d'échange thermique 1200.

Pour cela, le deuxième dispositif d'échange thermique 1300 peut être fluidiquement disposé entre le premier dispositif d'échange thermique 1200 et le système 1400. Plus particulièrement, le deuxième dispositif d'échange thermique 1300 peut être fluidiquement disposé entre l'entrée 1210 de la solution pauvre 110 du premier dispositif d'échange thermique 1200, par exemple par l'intermédiaire d'une valve d'expansion 410, et la sortie 1422 du module générateur 1420. Le deuxième dispositif d'échange thermique 1300 peut être fluidiquement disposé entre l'entrée 1411 de la solution riche 120 dans le système 1400, et la sortie 1240 de la solution riche 120 du premier dispositif d'échange thermique 1200, par exemple par l'intermédiaire du module pré-rectifieur comme décrit ultérieurement.

Le deuxième dispositif d'échange thermique 1300 peut comprendre au moins :

- une entrée 1310 de la solution pauvre 110,

- une sortie 1320 de la solution pauvre 110,

- une entrée 1330 de la solution riche 120, et

- une sortie 1340 de la solution riche 120.

L'entrée 1330 de la solution riche 120 du deuxième dispositif d'échange thermique 1300 peut être fluidiquement connectée avec la sortie 1240 de la solution riche 120 du premier dispositif d'échange thermique 1200. L'entrée 1330 de la solution riche 120 du deuxième dispositif d'échange thermique 1300 est de préférence directement fluidiquement connectée avec la sortie 1144 de la solution riche 120 comme fluide caloporteur dans le module pré-rectifieur 1440. Selon cet exemple, la sortie 1230 de la solution riche 120 du premier dispositif d'échange thermique 1200 est alors de préférence directement fluidiquement connectée avec l'entrée 1143 de la solution riche 120 comme fluide caloporteur dans le module pré-rectifieur 1440.

De préférence, la sortie 1340 de la solution riche 120 du deuxième dispositif d'échange thermique 1300 est fluidiquement connectée, de préférence directement, à l'entrée 1411 de la zone de distribution 1410 du système 1400 de génération et rectification de vapeur.

De préférence, l'entrée 1310 de la solution pauvre 110 du deuxième dispositif d'échange thermique 1300 est fluidiquement connectée, de préférence directement, avec la sortie 1422 du module générateur 1420 du système 1400.

De préférence, la sortie 1320 de la solution pauvre 110 du deuxième dispositif d'échange thermique 1300 est fluidiquement connectée avec l'entrée 1210 de la solution pauvre 110 du premier dispositif d'échange thermique 1200. Selon un exemple, la première valve d'expansion 410 est disposée fluidiquement entre la sortie 1320 de la solution pauvre 110 du deuxième dispositif d'échange thermique 1300 et l'entrée 1210 de la solution pauvre 110 du premier dispositif d'échange thermique 1200.

La première valve d'expansion 410 peut être configurée pour modifier la pression de la solution pauvre 110, de préférence pour abaisser la pression de la solution pauvre 110 par une détente isenthalpique. Cela permet que la solution pauvre 110 soit à basse pression lorsqu'elle arrive au premier dispositif d'échange thermique 1200 et de préférence à l'absorbeur 1100. Selon un exemple, la première valve d'expansion 410 est configurée pour générer une détente isotherme. Cela permet d'améliorer l'effet ou les effets thermodynamiques du premier dispositif d'échange thermique 1200 sur le mélange 100 en circulation.

Pour cela, la première valve d'expansion 410 peut être fluidiquement disposée entre le deuxième et le premier dispositif d'échange thermique 1200, 1300, relativement à la circulation de la solution pauvre 110. De préférence, la première valve d'expansion 410 est fluidiquement disposée entre le deuxième dispositif thermique 1300 et le premier dispositif d'échange thermique 1200 relativement à la circulation de la solution pauvre 110. Pour cela, l'entrée 411 de la solution pauvre 110 de la première valve d'expansion 410 peut être fluidiquement connectée, de préférence directement, à la sortie 1320 de la solution pauvre 110 du deuxième dispositif d'échange thermique 1300. De préférence, la sortie 412 de la solution pauvre 110 de la première valve d'expansion 410 est fluidiquement connectée, de préférence directement, à l'entrée 1210 de la solution pauvre 110 du premier dispositif d'échange thermique 1200.

Comme décrit précédemment relativement au système 1400 de génération et rectification de vapeur, le système 1400 est configuré pour séparer la solution riche en solution réfrigérante 130 en sortie 1432 du module rectifieur 1430, et en solution pauvre 110 en sortie 1422 du module générateur 1420. La solution pauvre 110 peut alors circuler jusqu'au module absorbeur 1100 tel que précédemment décrit.

Le module condenseur 1500 peut être configuré pour faire interagir thermiquement la solution réfrigérante 130 et le quatrième fluide caloporteur extérieur 240 de sorte à modifier la température de la solution réfrigérante 130, de préférence de sorte à diminuer la température de la solution réfrigérante 130 et à augmenter la température du fluide caloporteur 240.

De préférence, le condenseur 1500 comprend un échangeur thermique à plaques. Le condenseur 1500 est configuré pour utiliser le fluide caloporteur 240 de manière à refroidir la solution réfrigérante 130 le traversant. Cela permet alors de liquéfier en partie au moins une partie de la solution réfrigérante 130. Avantageusement, le condenseur 1500 permet de fixer la valeur de la haute pression. En effet, la haute pression est dépendante de la température minimale à laquelle la solution réfrigérante 130 est refroidie.

Pour cela, le module condenseur 1500 peut comprendre :

- une entrée 1510 de la solution réfrigérante 130,

- une sortie 1520 de la solution réfrigérante 130 et

- une entrée 1530 d'un quatrième fluide caloporteur 240,

- une sortie 1540 du quatrième fluide caloporteur 240.

De préférence, l'entrée 1510 de la solution réfrigérante 130 du condenseur 1500 est fluidiquement connectée, de préférence directement, à la sortie 1432 de la solution réfrigérante 130 du module rectifieur 1430.

La sortie 1520 de la solution réfrigérante 130 du condenseur 1500 est fluidiquement connectée à l'entrée 1710 de l'évaporateur 1700. Selon un exemple, un troisième dispositif d'échange thermique 1600 est disposé fluidiquement entre la sortie 1520 de la solution réfrigérante 130 du condenseur 1500 et l'entrée 1710 de l'évaporateur 1700. En outre, une bouteille 500 peut être fluidiquement disposée entre la sortie 1520 du condenseur et l'entrée 1710 de l'évaporateur 1700, de préférence la première entrée 1610 du troisième dispositif d'échange thermique 1600.

L'évaporateur 1700 est configuré pour faire interagir thermiquement la solution réfrigérante 130 et le cinquième fluide caloporteur extérieur 250, de façon à modifier la température du cinquième fluide caloporteur 250. Cette modification de température est induite par l'évaporation d'une partie au moins de la solution réfrigérante 130. Cela permet alors de diminuer la température du cinquième fluide caloporteur 250. De préférence, l'évaporateur 1700 comprend un échangeur thermique à plaques.

Pour cela, l'évaporateur 1700 peut comprendre :

- une entrée 1710 de la solution réfrigérante 130,

- une sortie 1720 de la solution réfrigérante 130,

- une entrée 1730 d'un cinquième fluide caloporteur 250, et

- une sortie 1740 du cinquième fluide caloporteur 250.

De préférence, l'entrée 1710 de la solution réfrigérante 130 de l'évaporateur 1700 est fluidiquement connectée à la sortie 1520 de la solution réfrigérante 130 du condenseur 1500. Selon un exemple, le troisième dispositif d'échange thermique 1600 est disposé fluidiquement entre la première sortie 1520 de la solution réfrigérante 130 du condenseur 1500 et l'entrée 1710 de la solution réfrigérante 130 de l'évaporateur 1700.

De préférence, la sortie 1720 de la solution réfrigérante 130 de l'évaporateur 1700 est fluidiquement connectée à l'entrée 1210 de la solution pauvre 110 du premier dispositif d'échange thermique 1200. Selon un exemple, le troisième dispositif d'échange thermique 1600 est disposé fluidiquement entre la sortie 1720 de la solution réfrigérante 130 de l'évaporateur 1700 et l'entrée 1210 de la solution pauvre 110 du premier dispositif d'échange thermique 1200.

Le troisième dispositif d'échange thermique 1600 peut être configuré pour faire interagir thermiquement la solution réfrigérante 130 avant son entrée dans l'évaporateur 1700 avec la solution réfrigérante 130 après sa sortie de l'évaporateur 1700.

Le troisième dispositif d'échange thermique 1600 est plus particulièrement configuré pour refroidir la solution réfrigérante 130 avant que celle-ci ne subisse une détente isenthalpique, par la deuxième valve d'expansion 420. Cela permet de minimiser et de préférence d'éviter un début de changement de phase de la solution réfrigérante 130 avant qu'elle ne pénètre dans l'évaporateur 1700.

De préférence, le troisième dispositif d'échange thermique 1600 comprend au moins un échangeur thermique à plaques, de préférence uniquement des échangeurs thermiques à plaques.

Le troisième dispositif d'échange thermique 1600 peut être disposé fluidiquement entre le condenseur 1500 et l'évaporateur 1700 relativement à la circulation de la solution réfrigérante 130. De préférence, le troisième dispositif d'échange thermique 1600 est disposé fluidiquement entre la sortie 1520 de la solution réfrigérante 130 du condenseur 1500 et l'entrée 1710 de la solution réfrigérante 130 de l'évaporateur 1700.

Selon un exemple, une deuxième valve d'expansion 420 est fluidiquement disposée entre le troisième dispositif d'échange thermique 1600 et l'évaporateur 1700. De préférence, la deuxième valve d'expansion est fluidiquement disposée entre la sortie 1620 de la solution réfrigérante 130 du troisième dispositif d'échange thermique 1600 et l'entrée 1710 de la solution réfrigérante 130 de l'évaporateur 1700.

Le troisième dispositif d'échange thermique 1600 peut être disposé fluidiquement entre l'évaporateur 1700 et le premier dispositif d'échange thermique 1200 relativement à la circulation de la solution réfrigérante 130. De préférence, le troisième dispositif d'échange thermique 1600 est disposé fluidiquement entre la sortie 1720 de la solution réfrigérante 130 de l'évaporateur 1700 et l'entrée 1210 de la solution réfrigérante 130 du premier dispositif d'échange thermique 1200.

Pour cela, le troisième dispositif d'échange thermique 1600 peut comprendre au moins :

- une première entrée 1610 de la solution réfrigérante 130,

- une première sortie 1620 de la solution réfrigérante 130,

- une deuxième entrée 1630 de la solution réfrigérante 130, et

- une deuxième sortie 1630 de la solution réfrigérante 130.

La première entrée 1610 de la solution réfrigérante 130 peut être fluidiquement connectée, à la sortie 1520 de la solution réfrigérante 130 du condenseur 1500, de préférence par l'intermédiaire de la deuxième bouteille de stockage 500.

La première sortie 1620 de la solution réfrigérante 130 peut être fluidiquement connectée, de préférence directement, à l'entrée 1710 de la solution réfrigérante 130 de l'évaporateur 1700. Selon un exemple, la première sortie 1620 de la solution réfrigérante 130 est fluidiquement connectée, de préférence directement, à l'entrée de la solution réfrigérante 130 de la deuxième valve d'expansion 420. Selon un exemple, la sortie 422 de la deuxième valve d'expansion 420 est fluidiquement connectée, de préférence directement, à l'entrée 1710 de la solution réfrigérante 130 de l'évaporateur 1700.

La deuxième entrée 1630 de la solution réfrigérante 130 du troisième dispositif d'échange thermique 1600 peut être fluidiquement connectée, de préférence directement, avec la sortie 1720 de la solution réfrigérante 130 de l'évaporateur 1700.

La deuxième sortie 1640 de la solution réfrigérante 130 du troisième dispositif d'échange thermique 1600 peut être fluidiquement connectée, de préférence directement, à l'entrée 1210 de la solution pauvre 110 du premier dispositif d'échange thermique 1200.

Avantageusement, la deuxième valve d'expansion 420 est configurée pour induire une détente isenthalpique de la solution réfrigérante 130. La deuxième valve d'expansion 420 peut être configurée pour modifier la pression de la solution réfrigérante 130, de préférence pour abaisser la pression de la solution réfrigérante 130 par une détente isenthalpique. Selon un exemple, la deuxième valve d'expansion 420 peut être configurée pour modifier la température de la solution réfrigérante 130, de préférence pour permettre à la solution réfrigérante 130 d'atteindre une température d'évaporation prédéterminée avant que la solution réfrigérante 130 ne pénètre dans l'évaporateur 1700.

La deuxième valve d'expansion 420 peut être fluidiquement disposée entre le module condenseur 1500 et le module évaporateur 1700 relativement à la circulation de la solution réfrigérante 130. De préférence, la deuxième valve d'expansion 420 est fluidiquement disposée entre le troisième dispositif d'échange thermique 1600 et l'évaporateur 1700 relativement à la circulation de la solution réfrigérante 130.

L'entrée 421 de la solution réfrigérante 130 de la deuxième valve d'expansion 420 peut être fluidiquement connectée, de préférence directement, à la première sortie 1620 du troisième dispositif d'échange thermique 1600. La sortie 422 de la deuxième valve d'expansion 420 peut être fluidiquement connectée, de préférence directement, à l'entrée 1710 de la solution réfrigérante 130 de l'évaporateur 1700.

### 3) Circuits de circulation des solutions

Au travers des figures 4 et 5, on peut définir différents parcours selon la solution considérée.

### 3.1) Solution riche

Tout d'abord, un exemple de parcours de la solution riche 120 dans la machine 1000 est décrit.

À la sortie de l'absorbeur 1100, la solution riche 120 est à l'état liquide, de préférence la solution riche 120 est dans un état de saturation relativement au deuxième fluide.

La solution riche 120 est ensuite pompée par la pompe à solution 300.

La solution riche 120 pénètre alors dans le premier dispositif d'échange thermique 1200 pour y être chauffée.

En sortie du premier dispositif d'échange thermique 1200, la solution riche 120 poursuit sa circulation jusqu'au module pré-rectifieur 1440 comme fluide caloporteur de ce module. La solution riche 120 est alors chauffée par échange thermique avec le mélange issu de la zone de distribution 1410. La solution riche 120 poursuit sa circulation ensuite dans le deuxième dispositif d'échange thermique 1300. Dans le deuxième dispositif d'échange thermique 1300, la solution riche 120 peut subir une désorption au moins partielle la rendant diphasique, par son interaction thermique avec la solution pauvre 110, circulant en contre-courant dans le deuxième dispositif d'échange thermique 1300. La solution riche 120 peut alors être diphasique en sortant du deuxième dispositif d'échange thermique 1300. Dans au moins un dispositif entre les dispositifs 1200, 1440 et 1300 la solution peut devenir au moins partiellement diphasique.

La solution riche 120 pénètre dans le système 1400 de génération et de rectification de vapeur pour être séparée d'une part en solution réfrigérante 130 et d'autre part en solution pauvre 110.

### 3.2) Solution pauvre

Un exemple de parcours de la solution pauvre 110 dans la machine 1000 est maintenant décrit.

La solution pauvre 110 sort du module générateur 1420 après séparation de la solution réfrigérante 130.

En traversant le deuxième dispositif d'échange thermique 1300, la solution pauvre 110 dont la température est élevée transfert une partie de cette chaleur à la solution riche 120. La température de la solution pauvre 110 en sortie du deuxième dispositif d'échange thermique 1300 est donc inférieure à la température de la solution pauvre 110 en entrée du deuxième dispositif d'échange thermique 1300.

Ensuite, la pression de la solution pauvre 110 est réduite par la première valve d'expansion 410.

Puis, afin de débuter la phase d'absorption, la solution pauvre 110 traverse le premier dispositif d'échange thermique 1200 et sa température est réduite avant de pénétrer dans l'absorbeur 1100. Avantageusement, avant de pénétrer dans le premier dispositif d'échange thermique 1200, la solution pauvre 110 est mélangée avec la solution réfrigérante 130 en provenance de l'évaporateur 1700, et de préférence en provenance du troisième dispositif d'échange thermique 1600. La solution pauvre 110 en sortie du premier dispositif d'échange thermique 1200 présente donc une concentration massique en deuxième fluide plus importante que la solution pauvre 110 en entrée du premier dispositif d'échange thermique 1200.

Enfin, la solution pauvre 110, en mélange avec la solution réfrigérante 130, pénètre dans l'absorbeur 1100 de sorte à atteindre un point de saturation pour obtenir la solution riche 120.

### 3.3) Solution réfrigérante

Un exemple de parcours de la solution réfrigérante 130 dans la machine 1000 est maintenant décrit.

La solution réfrigérante 130 est générée au niveau du système 1400 de génération et de rectification de vapeur, et sort du module rectifieur 1430.

La solution réfrigérante 130 circule jusqu'au condenseur 1500 pour y être refroidie et de préférence condensée.

Ensuite, la solution réfrigérante 130 pénètre dans le troisième dispositif d'échange thermique 1600 pour y être refroidie encore.

Une fois sortie du troisième dispositif d'échange thermique 1600, la solution réfrigérante 130 subit une détente isenthalpique par la deuxième valve d'expansion 420. Cela permet alors de faire atteindre à la solution réfrigérante 130 une pression d'évaporation, de préférence cette pression d'évaporation est comprise entre 10 bar et 0.1 bar, et avantageusement entre 5 bar et 1 bar.

Ensuite, la solution réfrigérante 130 pénètre dans l'évaporateur 1700 et refroidi le cinquième fluide caloporteur extérieur 250 en s'évaporant. Cela augmente alors la température de la solution réfrigérante 130.

Enfin, la solution réfrigérante 130 pénètre de nouveau dans le troisième dispositif d'échange thermique 1600 pour interagir thermiquement avec la solution réfrigérante 130 avant que celle-ci ne pénètre dans l'évaporateur 1700. La solution réfrigérante 130 sortant de l'évaporateur 1700 est ainsi chauffée avant de circuler jusqu'au premier dispositif d'échange thermique 1200.

Selon un exemple, et à titre d'exemple non limitatif, la présente invention permet d'obtenir les résultats suivants:

Production de froid positif (0-18°C) à haute performance (COP thermique >0,8) ;
Production de froid négatif (-40°C -> 0°C) à haute performance (COP thermique >supérieur à 0,25 à -40°C) ;
Production de chaleur jusqu'à 85°C à haute performance (COP thermique >1,5) ;
Gamme de fonctionnement de température du module générateur entre 80 et 200 degrés Celsius.

Au vu de la description qui précède, il apparaît clairement que l'invention propose une solution pour obtenir machine à absorption améliorée et performante en conciliant les nécessités techniques et économiques. L'invention n'est pas limitée aux modes de réalisations précédemment décrits et s'étend à tous les modes de réalisation couverts par l'invention. La présente invention ne se limite pas aux exemples précédemment décrits. Bien d'autres variantes de réalisation sont possibles, par exemple par combinaison de caractéristiques précédemment décrites, sans sortir du cadre de l'invention. En outre, les caractéristiques décrites relativement à un aspect de l'invention peuvent être combinées à un autre aspect de l'invention. L'invention est définie dans les revendications.

## LISTE DES REFERENCES NUMERIQUES

100 Mélange en circulation
110 Solution pauvre
120 Solution riche
120a Vapeur
120b Condensat
130 Solution réfrigérante
210 Premier fluide caloporteur extérieur
220 Deuxième fluide caloporteur extérieur
230 Troisième fluide caloporteur extérieur
240 Quatrième fluide caloporteur extérieur
250 Cinquième fluide caloporteur extérieur
300 Pompe à solution
410 Première valve d'expansion
411 Entrée de la valve d'expansion
412 Sortie de la valve d'expansion
420 Deuxième valve d'expansion
421 Entrée de la valve d'expansion
422 Sortie de la valve d'expansion
500 Bouteille de stockage
1000 Machine à absorption
1100 Module absorbeur
1110 Entrée de la solution pauvre du module absorbeur
1120 Sortie de la solution riche du module absorbeur
1130 Entrée du premier fluide caloporteur extérieur
1140 Sortie du premier fluide caloporteur extérieur
1200 Premier dispositif d'échange thermique
1210 Entrée de la solution pauvre du premier dispositif d'échange thermique
1220 Sortie de la solution pauvre du premier dispositif d'échange thermique
1230 Entrée de la solution riche du premier dispositif d'échange thermique
1240 Sortie de la solution riche du premier dispositif d'échange thermique
1300 Deuxième dispositif d'échange thermique
1310 Entrée de la solution pauvre du deuxième dispositif d'échange thermique
1320 Sortie de la solution pauvre du deuxième dispositif d'échange thermique
1330 Entrée de la solution riche du deuxième dispositif d'échange thermique
1340 Sortie de la solution riche du deuxième dispositif d'échange thermique
1400 Système de génération et de rectification de vapeur
1401 Sortie de la solution réfrigérante
1402 Sortie de la solution pauvre
1403 Enveloppe
1410 Zone de distribution
1411 Entrée de la solution riche de la zone de distribution
1420 Module générateur
1421 Entrée de la solution riche du module générateur
1422 Sortie de la solution pauvre du module générateur
1423 Entrée du deuxième fluide caloporteur du module générateur
1424 Sortie du deuxième fluide caloporteur du module générateur
1430 Module rectifieur
1431 Entrée de vapeur dans le module rectifieur
1432 Sortie de la solution réfrigérante du module rectifieur
1433 Entrée du troisième fluide caloporteur du le module rectifieur
1434 Sortie du troisième fluide caloporteur du module rectifieur
1440 Module pré-rectifieur
1441 Entrée de vapeur dans le module pré-rectifieur
1442 Sortie de vapeur du module pré-rectifieur
1443 Entrée de la solution riche du module pré-rectifieur
1444 Sortie de la solution riche du module pré-rectifieur
1420a, 1430a, 1440a Échangeur thermique à plaques en spirale
1420a', 1430a', 1440a' Plaque en spirale
1420a", 1430a", 1440a" Plaque en spirale
1420b, 1430b, 1440b Passage de circulation
1500 Module condenseur
1510 Entrée de la solution réfrigérante du module condenseur
1520 Sortie de la solution réfrigérante du module condenseur
1530 Entrée du quatrième fluide caloporteur du module condenseur
1540 Sortie du quatrième fluide caloporteur du module condenseur
1600 Troisième dispositif d'échange thermique
1610 Première entrée de la solution réfrigérante du troisième dispositif d'échange thermique
1620 Première sortie de la solution réfrigérante du troisième dispositif d'échange thermique
1630 Deuxième entrée de la solution réfrigérante du troisième dispositif d'échange thermique
1640 Deuxième sortie de la solution réfrigérante du troisième dispositif d'échange thermique
1700 Module évaporateur
1710 Entrée de la solution réfrigérante du module évaporateur
1720 Sortie de la solution réfrigérante du module évaporateur
1730 Entrée du cinquième fluide caloporteur extérieur du module évaporateur
1740 Sortie du cinquième fluide caloporteur extérieur du module évaporateur

**Revendications**

1. Machine à absorption (1000) comprenant un mélange (100) en circulation dans un circuit, le mélange (100) comprenant un premier fluide et un deuxième fluide, la machine (1000) présentant une première configuration de production de froid et une deuxième configuration de production de chaleur, le mélange (100) en circulation présentant une concentration massique en deuxième fluide variant en fonction de sa position dans le circuit de sorte à définir pour le mélange en circulation, en fonction de la position, une solution dite pauvre (110), une solution dite riche (120), et une solution dite réfrigérante (130), la machine (1000) comprenant au moins :

   • un module absorbeur (1100) configuré pour augmenter le taux de concentration massique du deuxième fluide de la solution pauvre (110) de façon à transformer la solution pauvre (110) en solution riche (120),
   • un premier dispositif d'échange thermique (1200) configuré pour faire interagir thermiquement la solution riche (120) à partir de la température de la solution pauvre (110),
   • un système (1400) de génération et rectification de vapeur pour machine à absorption (1000), configuré pour transformer la solution riche (120) de façon à obtenir la solution pauvre (110) en sortie (1422) du module générateur (1420) et la solution réfrigérante (130) en sortie (1432) du module rectifieur (1430), dans lequel circule le mélange (100), comprenant au moins :

      ◦ une zone de distribution (1410) comprenant une entrée (1411) de la solution riche (120), destinée à être raccordée à un circuit d'une machine à absorption (1000) dans lequel circule le mélange (100),
      ◦ un module générateur (1420) de chaleur comprenant un premier échangeur thermique à plaques en spirale (1420a) configuré pour chauffer le mélange issu de la zone de distribution (1410), et comprenant une sortie (1422) de la solution pauvre (110),
      ◦ un module rectifieur (1430) comprenant un deuxième échangeur thermique à plaques en spirale (1430a) configuré pour refroidir le mélange (100) issu de la zone de distribution (1410), et comprenant une sortie (1432) de la solution réfrigérante (130),

   et dans lequel la zone de distribution (1410) est située, selon une projection sur un axe vertical, entre le module générateur (1420) et le module rectifieur (1430), la zone de distribution (1410), le module générateur (1420) et le module rectifieur (1430) étant configurés de sorte que, du module générateur (1420) au module rectifieur (1430) :

      ◦ le premier fluide de la solution riche (120) se condense,
      ◦ le deuxième fluide de la solution riche (120) s'évapore,

   pour obtenir la solution pauvre (110) en sortie (1422) du module générateur (1420) et la solution réfrigérante (130) en sortie (1432) du module rectifieur (1430),

   • un module condenseur (1500) configuré pour condenser la solution réfrigérante (130) issue du module rectifieur (1430) du système (1400),
   • un module évaporateur (1700) configuré pour évaporer au moins en partie la solution réfrigérante (130) issue du module condenseur (1500),

   dans laquelle :

   • dans la première configuration, la machine (1000) est configurée pour refroidir un fluide caloporteur (250) extérieur circulant dans le module évaporateur,
   • dans la deuxième configuration, un fluide caloporteur (210) extérieur circule dans le module absorbeur et un fluide caloporteur (240) extérieur circule dans le module condenseur, la machine étant configurée pour augmenter la température d'au moins un desdits fluide caloporteur extérieur, et
   • le module absorbeur (1100) comprend :

      ◦ une entrée (1110) de la solution pauvre (110), la solution pauvre (110) présentant une première température,
      ◦ une sortie (1120) de la solution riche (120), la solution riche (120) présentant une deuxième température inférieure à la première température,
      ◦ une entrée (1130) d'un premier fluide caloporteur extérieur (210), et
      ◦ une sortie (1140) du premier fluide caloporteur extérieur (210),

   le module absorbeur (1100) étant configuré pour faire interagir thermiquement un mélange de la solution pauvre (110) et de la solution réfrigérante (130) avec le premier fluide caloporteur extérieur (210) de sorte à transformer le mélange de la solution pauvre (110) et de la solution réfrigérante (130) en solution riche (120),

- le premier dispositif d'échange thermique (1200) comprend :

    ◦ une entrée (1210) de la solution pauvre (110),
    ◦ une sortie (1220) de la solution pauvre (110),
    ◦ une entrée (1230) de la solution riche (120),
    ◦ une sortie (1240) de la solution riche (120) et

le premier dispositif d'échange thermique (1200) étant configuré pour augmenter la température de la solution riche (120) à partir de la température de la solution pauvre,
l'entrée (1230) de la solution riche (120) du premier dispositif d'échange thermique (1200) étant fluidiquement connectée à la sortie (1120) de la solution riche (120) du module absorbeur (1100), et
la sortie (1220) de la solution pauvre (110) du premier dispositif d'échange thermique (1200) étant fluidiquement connectée à l'entrée (1110) de la solution pauvre (110) du module absorbeur (1100),

- dans le système de génération et rectification de vapeur (1400),:

    ◦ la zone de distribution (1410) comprend l'entrée (1411) de la solution riche (130),
    ◦ le module générateur (1420) comprend la sortie (1422) de la solution pauvre (110),
    ◦ le module rectifieur (1430) comprend la sortie (1432) de la solution réfrigérante (130),

l'entrée (1411) de la solution riche (120) de la zone de distribution (1410) étant fluidiquement connectée à la sortie (1240) de la solution riche (120) du premier dispositif d'échange thermique (1200),
le module générateur (1420) étant configuré pour faire interagir thermiquement le mélange (100) issu de la zone de distribution (1410) et un deuxième fluide caloporteur extérieur (220) de sorte à augmenter la température du mélange (100),
le module rectifieur (1420) étant configuré pour faire interagir thermiquement le mélange (100) issu de la zone de distribution (1410) et un troisième fluide caloporteur extérieur (230) de sorte à augmenter la température du mélange (100),
le système (1400) comprenant en outre un module pré-rectifieur (1440) comprenant un troisième échangeur thermique à plaques en spirale (1440a) et disposé entre la zone de distribution (1410) et le module rectifieur (1430), le module pré-rectifieur (1440) comprenant :

    • une entrée (1443) de la solution riche (120)
    • une sortie (1444) de la solution riche (120)

le module pré-rectifieur étant configuré pour faire interagir thermiquement la solution riche (120) et le mélange (100) issu de la zone de distribution (1410), de façon à refroidir le mélange (100) issu de la zone de distribution (1410) et chauffer la solution riche,
l'entrée (1443) de la solution riche (120) étant fluidiquement connectée à la sortie (1120) de la solution riche (120) du module absorbeur (1100),
la sortie (1444) de la solution riche (120) étant fluidiquement connectée à l'entrée (1411) de la solution riche (120) de la zone de distribution (1400) du système (1400),
et dans laquelle :

    • la sortie (1444) de la solution riche (120) du module pré-rectifieur (1440) est fluidiquement connectée à l'entrée (1230) de la solution riche (120) du premier dispositif d'échange thermique (1200),
    ou
    • la machine comprend un deuxième dispositif d'échange thermique (1300) comprenant :
    • une entrée (1330) de la solution riche (120),

        ◦ une sortie (1340) de la solution riche (120),
        ◦ une entrée (1310) de la solution pauvre (110),
        ◦ une sortie (1320) de la solution pauvre (110),

le deuxième dispositif d'échange thermique (1300) étant configuré pour faire interagir thermiquement la solution riche (120) avec la solution pauvre (110), de préférence pour faire augmenter la température de la solution riche (120) et faire diminuer la température de la solution pauvre (110),
l'entrée (1330) de la solution riche (120) du deuxième dispositif d'échange thermique (1300) étant fluidiquement connectée avec la sortie (1240) de la solution riche (120) du premier dispositif d'échange thermique (1200),
la sortie (1340) de la solution riche (120) du deuxième dispositif d'échange thermique (1300) étant fluidiquement connectée à l'entrée (1411) de la solution riche (120) de la zone de distribution (1410) du système (1400),

l'entrée (1310) de la solution pauvre (110) du deuxième dispositif d'échange thermique (1300) étant fluidiquement connectée avec la sortie (1432) de la solution pauvre (110) du module générateur (1420) du système (1400),

la sortie (1320) de la solution pauvre (110) du deuxième dispositif d'échange thermique (1300) étant fluidiquement connectée avec l'entrée (1210) de la solution pauvre (110) du premier dispositif d'échange thermique (1200).

l'entrée (1443) de la solution riche (120) du module pré-rectifieur (1440) est fluidiquement connectée à la sortie (1240) de la solution riche (120) du premier dispositif d'échange thermique (1200),

la sortie (1444) de la solution riche (120) du module pré-rectifieur est fluidiquement connectée à l'entrée (1330) de la solution riche (120) du deuxième dispositif d'échange thermique (1300).

**2.** Machine (1000) selon la revendication précédente, dans laquelle la zone de distribution (1410), le module générateur (1420) et le module rectifieur (1430) du système (1400) sont situés dans une enveloppe, dans laquelle la zone de distribution (1410), le module générateur (1420) et le module rectifieur (1430) sont superposés selon une direction principale d'extension de l'enveloppe.

**3.** Machine (1000) selon l'une quelconque des revendications précédentes, dans laquelle :

• la solution pauvre (110) présente un premier taux de concentration massique en deuxième fluide,
• la solution riche (120) présente un deuxième taux de concentration massique en deuxième fluide,
• la solution réfrigérante (130) présente un troisième taux de concentration massique en deuxième fluide, le premier taux de concentration, le deuxième taux de concentration, et le troisième taux de concentration étant chacun différents les uns des autres.

**4.** Machine (1000) selon la revendication précédente, dans laquelle :

• le premier taux de concentration est inférieur au deuxième taux de concentration, et
• le premier taux de concentration et le deuxième taux de concentration sont inférieurs au troisième taux de concentration.

**5.** Machine (1000) selon l'une quelconque des revendications précédentes dans laquelle au moins l'un parmi le module absorbeur (1100), le premier dispositif d'échange thermique (1200), le module condenseur (1500), le module évaporateur (1700) comprend au moins un échangeur thermique à plaques.

**6.** Machine (1000) selon la revendication précédente dans laquelle l'échangeur thermique à plaques est configuré pour que les fluides le traversant circulent en contre-courant les uns relativement aux autres.

**7.** Machine selon l'une quelconque des revendications précédentes, dans laquelle :

• le module condenseur (1500) comprend :

◦ une entrée (1510) de la solution réfrigérante (130),
◦ une sortie (1520) de la solution réfrigérante (130)
◦ une entrée (1530) d'un quatrième fluide caloporteur extérieur (240), et
◦ une sortie (1540) du quatrième fluide caloporteur extérieur (240),

le module condenseur (1500) étant configuré pour faire interagir thermiquement la solution réfrigérante (130) et le quatrième fluide caloporteur extérieur (240) de façon à condenser la solution réfrigérante (130),
l'entrée (1510) de la solution réfrigérante (130) du module condenseur (1500) étant fluidiquement connectée à la sortie (1432) de la solution réfrigérante (130) du module rectifieur (1430),

• le module évaporateur (1700) comprend :

◦ une entrée (1710) de la solution réfrigérante (130),
◦ une sortie (1720) de la solution réfrigérante (130),
◦ une entrée (1730) d'un cinquième fluide caloporteur extérieur (250),
◦ une sortie (1740) du cinquième fluide caloporteur extérieur (250),

le module évaporateur (1700) étant configuré pour faire interagir thermiquement la solution réfrigérante (130) et le cinquième fluide caloporteur extérieur (250) de façon à modifier, de préférence à diminuer, la température du quatrième fluide caloporteur extérieur (250) par l'évaporation d'une partie au moins de la solution réfrigérante (130),
l'entrée (1710) de la solution réfrigérante (130) du module évaporateur (1700) étant fluidiquement connectée à la sortie de la solution réfrigérante (130) du module condenseur (1500),

la sortie (1720) de la solution réfrigérante (130) du module évaporateur (1700) étant fluidiquement connectée à l'entrée (1110) de la solution pauvre (110) du module absorbeur (1100), Et dans laquelle :

• Dans la première configuration, la machine (1000) est configurée pour refroidir le cinquième fluide caloporteur extérieur (250),
• Dans la deuxième configuration, la machine (1000) est configurée pour augmenter la température d'au moins un parmi, et de préférence de chacun parmi, le premier fluide caloporteur extérieur (210), le troisième fluide caloporteur extérieur (230), et le quatrième fluide caloporteur extérieur (240).

8. Machine selon la revendication précédente, dans laquelle le premier fluide caloporteur extérieur (210) et le quatrième fluide caloporteur extérieur (240) forment un seul et même fluide caloporteur extérieur commun, et dans laquelle

• la sortie (1140) du premier fluide caloporteur extérieur (210) du module absorbeur (1100) est fluidiquement connectée à l'entrée (1530) du quatrième fluide caloporteur extérieur (240) du module condenseur (1500) et/ou
• l'entrée (1130) du premier fluide caloporteur extérieur (210) du module absorbeur (1100) est fluidiquement connectée à la sortie (1540) du quatrième fluide caloporteur extérieur (240) du module condenseur (1500).

9. Machine selon l'une quelconque des deux revendications précédentes, dans laquelle la sortie (1720) de la solution réfrigérante (130) du module évaporateur (1700) est fluidiquement connectée à l'entrée (1110) de la solution pauvre (110) du module absorbeur (1100), la solution pauvre (110) et la solution réfrigérante (130) étant mélangées en amont ou au niveau de l'entrée (1210) de la solution pauvre (110) du premier dispositif d'échange thermique (1210).

10. Machine (1000) selon l'une quelconque des revendications précédentes, la machine comprenant le deuxième dispositif d'échange thermique (1300) comprenant :

• une entrée (1330) de la solution riche (120),
• une sortie (1340) de la solution riche (120),
• une entrée (1310) de la solution pauvre (110),
• une sortie (1320) de la solution pauvre (110), le deuxième dispositif d'échange thermique (1300) étant configuré pour faire interagir thermiquement la solution riche (120) avec la solution pauvre (110), de préférence pour faire augmenter la température de la solution riche (120) à partir de la température de la solution pauvre (110), l'entrée (1330) de la solution riche (120) du deuxième dispositif d'échange thermique (1300) étant fluidiquement connectée avec la sortie (1240) de la solution riche (120) du premier dispositif d'échange thermique (1200), la sortie (1340) de la solution riche (120) du deuxième dispositif d'échange thermique (1300) étant fluidiquement connectée à l'entrée (1411) de la solution riche (120) de la zone de distribution (1410) du système (1400), l'entrée (1310) de la solution pauvre (110) du deuxième dispositif d'échange thermique (1300) étant fluidiquement connectée avec la sortie (1432) de la solution pauvre (110) du module générateur (1420) du système (1400), la sortie (1320) de la solution pauvre (110) du deuxième dispositif d'échange thermique (1300) étant fluidiquement connectée avec l'entrée (1210) de la solution pauvre (110) du premier dispositif d'échange thermique (1200).

11. Machine (1000) selon la revendication précédente dans laquelle le deuxième dispositif d'échange thermique (1300) comprend au moins un échangeur thermique à plaques.

12. Machine (1000) selon la revendication précédente dans laquelle la solution pauvre (110) et la solution riche (120) circulent à contre-courant dans l'échangeur thermique à plaques du deuxième dispositif d'échange thermique (1300).

13. Machine (1000) selon l'une quelconque des revendications 7 à 9, ou l'une quelconque des revendications 10 à 12 en combinaison avec la revendication 7, comprenant un troisième dispositif d'échange thermique (1600) comprenant ;

• une première entrée (1610) de la solution réfrigérante (130),
• une deuxième sortie (1620) de la solution réfrigérante (130),
• une deuxième entrée (1630) de la solution réfrigérante (130), et
• une deuxième sortie (1640) de la solution réfrigérante (130), le troisième dispositif d'échange thermique (1600) étant configuré pour faire interagir thermiquement la solution réfrigérante (130) avant son entrée dans le module évaporateur (1700) avec la solution réfrigérante (130) après sa sortie du module évaporateur (1700), la première entrée (1610) de la solution réfrigérante (130) du troisième dispositif d'échange thermique (1600) étant fluidiquement connectée à la sortie (1520) de la solution réfrigérante (130) du module condenseur (1500),

la première sortie (1620) de la solution réfrigérante (130) du troisième dispositif d'échange thermique (1600) étant fluidiquement connectée à la première entrée (1710) de la solution réfrigérante (130) du module évaporateur (1700),

la deuxième entrée (1630) de la solution réfrigérante (130) du troisième dispositif d'échange thermique (1600) étant fluidiquement connectée à la sortie (1720) de la solution réfrigérante (130) du module évaporateur (1700),

la deuxième sortie (1640) de la solution réfrigérante (130) du troisième dispositif d'échange thermique (1600) étant fluidiquement connectée à l'entrée (1210) de la solution pauvre (110) du premier dispositif d'échange thermique (1200).

14. Machine (1000) selon la revendication précédente dans laquelle le troisième dispositif d'échange thermique (1600) comprend au moins un échangeur thermique à plaques.

15. Machine (1000) selon l'une quelconque des revendications précédentes, dans laquelle le premier fluide comprend de l'eau et/ou un solvant tel que le nitrate de lithium ou le thiocyanate de sodium, et dans laquelle le deuxième fluide comprend de l'ammoniac ou de l'alcool.

**Patentansprüche**

1. Absorptionsmaschine (1000), die eine Mischung (100) in Zirkulation in einem Kreislauf umfasst, wobei die Mischung (100) ein erstes und ein zweites Fluid umfasst, wobei die Maschine (1000) eine erste Kälteproduktionskonfiguration und eine zweite Wärmeproduktionskonfiguration aufweist, wobei die zirkulierende Mischung (100) eine Massenkonzentration an zweitem Fluid aufweist, die in Abhängigkeit von ihrer Position in dem Kreislauf derart variiert, dass für die zirkulierende Mischung in Abhängigkeit von der Position eine sogenannte magere Lösung (110), eine sogenannte reichhaltige Lösung (120) und eine sogenannte Kältelösung (130) definiert sind, wobei die Maschine (1000) mindestens Folgendes umfasst:

• ein Absorbermodul (1100), das dazu konfiguriert ist, die Massenkonzentration des zweitens Fluids der mageren Lösung (110) derart zu erhöhen, dass die magere Lösung (110) in eine reichhaltige Lösung (120) umgewandelt wird;
• eine erste Wärmeaustauschvorrichtung (1200), die dazu konfiguriert ist, die Temperatur der reichhaltigen Lösung (120) ausgehend von der mageren Lösung (110) in Wärmewechselwirkung treten zu lassen,
• ein Dampferzeugungs- und -rektifikationssystem (1400) für Absorptionsmaschine (1000), das dazu konfiguriert ist, die reichhaltige Lösung (120) derart umzuwandeln, dass die magere Lösung (110) am Ausgang (1422) des Erzeugungsmoduls (1420) und die Kältelösung (130) am Ausgang (1432) des Rektifikatikonsmoduls (1430), in dem die Mischung (100) zirkuliert, erhalten wird, das mindestens Folgendes umfasst:

◦ eine Verteilungszone (1410), die einen Eingang (1411) der reichhaltigen Lösung (120) umfasst, der dazu bestimmt ist, an einen Kreislauf einer Absorptionsmaschine (1000) angeschlossen zu sein, in dem die Mischung (100) zirkuliert,
◦ ein Wärmeerzeugungsmodul (1420), das einen ersten spiralförmigen Plattenwärmetauscher (1420a) umfasst, der dazu konfiguriert ist, die Mischung, die aus der Verteilungszone (1410) austritt, zu erwärmen und einen Ausgang (1422) der mageren Lösung (110) umfasst,
◦ ein Rektifikatikonsmodul (1430), das einen zweiten spiralförmigen Plattenwärmetauscher (1430a) umfasst, der dazu konfiguriert ist, die Mischung (100), die aus der Verteilungszone (1410) austritt, zu kühlen, und das einen Ausgang (1432) der Kältelösung (130) umfasst,

und in dem die Verteilungszone (1410) gemäß einer Projektion auf einer vertikalen Achse zwischen dem Erzeugungsmodul (1420) und dem Rektifikatikonsmodul (1430) liegt, wobei die Verteilungszone (1410), das Erzeugungsmodul (1420) und das Rektifikatikonsmodul (1430) derart konfiguriert sind, dass von dem Erzeugungsmodul (1420) zu dem Rektifikatikonsmodul (1430):

◦ das erste Fluid der reichhaltigen Lösung (120) kondensiert,
◦ das zweite Fluid der reichhaltigen Lösung (120) verdampft,

um die magere Lösung (110) am Ausgang (1422) des Erzeugungsmoduls (1420) und die Kältelösung (130) am Ausgang (1432) des Rektifikatikonsmoduls (1430) zu erhalten,

• ein Kondensatormodul (1500), das dazu konfiguriert ist, die Kältelösung (130), die aus dem Rektifikatikonsmodul (1430) des Systems (1400) austritt, zu kondensieren,

• ein Verdampfermodul (1700), das dazu konfiguriert ist, die Kältelösung (130), die aus dem Kondensatormodul (1500) austritt, mindestens zum Teil zu verdampfen,

wobei:

• in der ersten Konfiguration die Maschine (1000) dazu konfiguriert ist, ein externes Wärmeträgerfluid (250), das in dem Verdampfermodul zirkuliert, zu kühlen;
• in der zweiten Konfiguration ein externes Wärmeträgerfluid (210) in dem Absorbermodul zirkuliert, und ein externes Wärmeträgerfluid (240) in dem Kondensatormodul zirkuliert, wobei die Maschine dazu konfiguriert ist, die Temperatur mindestens eines der externen Wärmeträgerfluide zu erhöhen, und
• das Absorbermodul (1100) Folgendes umfasst:

    ◦ einen Eingang (1110) der mageren Lösung (110), wobei die magere Lösung (110) eine erste Temperatur aufweist,
    ◦ einen Ausgang (1120) der reichhaltigen Lösung (120), wobei die reichhaltige Lösung (120) eine zweite Temperatur, die niedriger ist als die erste Temperatur, aufweist,
    ◦ einen Eingang (1130) eines ersten externen Wärmeträgerfluids (210) und
    ◦ einen Ausgang (1140) des ersten externen Wärmeträgerfluids (210),

wobei das Absorbermodul (1100) dazu konfiguriert ist, eine Mischung der mageren Lösung (110) und der Kältelösung (130) mit dem ersten externen Wärmeträgerfluid (210) derart in Wärmewechselwirkung treten zu lassen, dass die Mischung aus der mageren Lösung (110) und der Kältelösung (130) in reichhaltige Lösung (120) umgewandelt wird,

    • wobei die erste Wärmeaustauschvorrichtung (1200) Folgendes umfasst:

        ◦ einen Eingang (1210) der mageren Lösung (110),
        ◦ einen Ausgang (1220) der mageren Lösung (110),
        ◦ einen Eingang (1230) der reichhaltigen Lösung (120),
        ◦ wobei ein Ausgang (1240) der reichhaltigen Lösung (120) und

die erste Wärmeaustauschvorrichtung (1200) dazu konfiguriert sind, die Temperatur der reichhaltigen Lösung (120) ausgehend von der Temperatur der mageren Lösung zu erhöhen, wobei der Eingang (1230) der reichhaltigen Lösung (120) der ersten Wärmeaustauschvorrichtung (1200) mit dem Ausgang (1120) der reichhaltigen Lösung (120) des Absorbermoduls (1100) fluidisch verbunden ist, und
der Ausgang (1220) der mageren Lösung (110) der ersten Wärmeaustauschvorrichtung (1200) mit dem Eingang (1110) der mageren Lösung (110) des Absorbermoduls (1100) fluidisch verbunden ist,

    • in dem Dampferzeugungs- und Rektifikationssystem (1400):

        ◦ die Verteilungszone (1410) den Eingang (1411) der reichhaltigen Lösung (130) umfasst,
        ◦ das Erzeugungsmodul (1420) den Ausgang (1422) der mageren Lösung (110) umfasst,
        ◦ das Rektifikatikonsmodul (1430) den Ausgang (1432) der Kältelösung (130) umfasst,

wobei der Eingang (1411) der reichhaltigen Lösung (120) der Verteilungszone (1410) mit dem Ausgang (1240) der reichhaltigen Lösung (120) der ersten Wärmeaustauschvorrichtung (1200) fluidisch verbunden ist;
wobei das Erzeugungsmodul (1420) dazu konfiguriert ist, die Mischung (100), die aus der Verteilungszone (1410) austritt, und ein zweites externes Wärmeträgerfluid (220) derart in Wärmewechselwirkung treten zu lassen, dass die Temperatur der Mischung (100) erhöht wird,
wobei das Rektifikationsmodul (1420) dazu konfiguriert ist, die Mischung (100), die aus der Verteilungszone (1410) austritt, und ein drittes externes Wärmeträgerfluid (230) derart in Wärmewechselwirkung treten zu lassen, dass die Temperatur der Mischung (100) erhöht wird,
wobei das System (1400) außerdem ein Vorrektifikatikonsmodul (1440) umfasst, das einen dritten spiralförmigen Plattenwärmetauscher (1440a) umfasst und zwischen der Verteilungszone (1410) und dem Rektifikationsmodul (1430) angeordnet ist, wobei das Vorrektifikatikonsmodul (1440) Folgendes umfasst

    • einen Eingang (1443) der reichhaltigen Lösung (120)
    • einen Ausgang (1444) der reichhaltigen Lösung (120)

wobei das Vorrektifikationsmodul dazu konfiguriert ist, die reichhaltige Lösung (120) und die Mischung (100), die aus der Verteilungszone (1410) austritt, derart in Wärmewechselwirkung treten zu lassen, dass die Mischung (100), die aus der Verteilungszone (1410) austritt, gekühlt und die reichhaltige Lösung erwärmt wird, wobei der Eingang (1443) der reichhaltigen Lösung (120) mit dem Ausgang (1120) der reichhaltigen Lösung (120) des Absorbermoduls (1100) fluidisch verbunden ist,

wobei der Ausgang (1444) der reichhaltigen Lösung (120) mit dem Eingang (1411) der reichhaltigen Lösung (120) der Verteilungszone (1400) des Systems (1400) verbunden ist, und wobei:

> • wobei der Ausgang (1444) der reichhaltigen Lösung (120) des Vorrektifikationsmoduls (1440) mit dem Eingang (1230) der reichhaltigen Lösung (120) der ersten Wärmeaustauschvorrichtung (1200) fluidisch verbunden ist,
> oder
> • die Maschine eine zweite Wärmeaustauschvorrichtung (1300) umfasst, die Folgendes umfasst:
> • einen Eingang (1330) der reichhaltigen Lösung (120),
>
>> ○ einen Ausgang (1340) der reichhaltigen Lösung (120)
>> ○ einen Eingang (1310) der mageren Lösung (110),
>> ○ einen Ausgang (1320) der mageren Lösung (110),

wobei die zweite Wärmeaustauschvorrichtung (1300) dazu konfiguriert ist, die reichhaltige Lösung (120) mit der mageren Lösung (110) in Wärmewechselwirkung treten zu lassen, bevorzugt um die Temperatur der reichhaltigen Lösung (120) zu erhöhen und die Temperatur der mageren Lösung (110) zu verringern, wobei der Eingang (1330) der reichhaltigen Lösung (120) der zweiten Wärmeaustauschvorrichtung (1300) mit dem Ausgang (1240) der reichhaltigen Lösung (120) der ersten Wärmeaustauschvorrichtung (1200) fluidisch verbunden ist, wobei der Ausgang (1340) der reichhaltigen Lösung (120) der zweiten Wärmeaustauschvorrichtung (1300) mit dem Eingang (1411) der reichhaltigen Lösung (120) der Verteilungszone (1410) des Systems (1400) fluidisch verbunden ist, wobei der Eingang (1310) der mageren Lösung (110) der zweiten Wärmeaustauschvorrichtung (1300) mit dem Ausgang (1432) der mageren Lösung (110) des Erzeugungsmoduls (1420) des Systems (1400) fluidisch verbunden ist, wobei der Ausgang (1320) der mageren Lösung (110) der zweiten Wärmeaustauschvorrichtung (1300) mit dem Eingang (1210) der mageren Lösung (110) der ersten Wärmeaustauschvorrichtung (1200) fluidisch verbunden ist, wobei der Eingang (1443) der reichhaltigen Lösung (120) des Vorrektifikationsmoduls (1440) mit dem Ausgang (1240) der reichhaltigen Lösung (120) der ersten Wärmeaustauschvorrichtung (1200) fluidisch verbunden ist, wobei der Ausgang (1444) der reichhaltigen Lösung (120) des Vorrektifikationsmoduls mit dem Eingang (1330) der reichhaltigen Lösung (120) der zweiten Wärmeaustauschvorrichtung (1300) fluidisch verbunden ist.

2. Maschine (1000) nach dem vorstehenden Anspruch, wobei die Verteilungszone (1410), das Erzeugungsmodul (1420) und das Rektifikationsmodul (1430) des Systems (1400) in einem Mantel liegen, in dem die Verteilungszone (1410) das Erzeugungsmodul (1420) und das Rektifikationsmodul (1430) gemäß einer Haupterstreckungsrichtung des Mantels übereinander gelagert sind.

3. Maschine (1000) nach einem der vorstehenden Ansprüche, wobei,

> • die magere Lösung (110) eine erste Massenkonzentration an zweitem Fluid aufweist,
> • die reichhaltige Lösung (120) eine zweite Massenkonzentration an zweitem Fluid aufweist,
> • die Kältelösung (130) eine dritte Massenkonzentration an zweitem Fluid aufweist, wobei die erste Konzentration, die zweite Konzentration und die dritte Konzentration jeweils voneinander unterschiedlich sind.

4. Maschine (1000) nach dem vorstehenden Anspruch, wobei:

> • die erste Konzentration niedriger ist als die zweite Konzentration, und
> • die erste Konzentration und die zweite Konzentration kleiner als die dritte Konzentration sind.

5. Maschine (1000) nach einem der vorstehenden Ansprüche, wobei mindestens eines von dem Absorbermodul (1100), der ersten Wärmeaustauschvorrichtung (1200), dem Kondensatormodul (1500), dem Verdampfermodul (1700) mindestens einen Plattenwärmetauscher umfasst.

6. Maschine (1000) nach dem vorstehenden Anspruch, wobei der Plattenwärmetauscher dazu konfiguriert ist, dass die Fluide, die ihn durchqueren, im Gegenstrom zueinander zirkulieren.

**7.** Maschine nach einem der vorstehenden Ansprüche, wobei:

• das Kondensatormodul (1500) Folgendes umfasst:

◦ einen Eingang (1510) der Kältelösung (130),
◦ einen Ausgang (1520) der Kältelösung (130),
◦ einen Eingang (1530) eines vierten externen Wärmeträgerfluids (240) und
◦ einen Ausgang (1540) des vierten externen Wärmeträgerfluids (240), wobei das Kondensatormodul (1500) dazu konfiguriert ist, die Kältelösung (130) und das vierte externe Wärmeträgerfluid (240) derart in Wärmewechselwirkung treten zu lassen, dass die Kältelösung (130) kondensiert,

wobei der Eingang (1510) der Kältelösung (130) des Kondensatormoduls (1500) mit dem Ausgang (1432) der Kältelösung (130) des Rektifikationsmoduls (1430) fluidisch verbunden ist,

• das Verdampfermodul (1700) Folgendes umfasst:

◦ einen Eingang (1710) der Kältelösung (130),
◦ einen Ausgang (1720) der Kältelösung (130),
◦ einen Eingang (1730) eines fünften externen Wärmeträgerfluids (250),
◦ einen Ausgang (1740) des fünften externen Wärmeträgerfluids (250),

wobei das Verdampfermodul (1700) dazu konfiguriert ist, die Kältelösung (130) und das fünfte externe Wärmeträgerfluid (250) derart in Wärmewechselwirkung treten zu lassen, dass die Temperatur des vierten externen Wärmeträgerfluids (250) durch Verdampfung mindestens eines Teils der Kältelösung (130) modifiziert, bevorzugt verringert wird,
wobei der Eingang (1710) der Kältelösung (130) des Verdampfermoduls (1700) mit dem Ausgang der Kältelösung (130) des Kondensatormoduls (1500) fluidisch verbunden ist,
der Ausgang (1720) der Kältelösung (130) des Verdampfermoduls (1700) mit dem Eingang (1110) der mageren Lösung (110) des Absorbermoduls (1100) fluidisch verbunden ist,
und wobei:

• in der ersten Konfiguration die Maschine (1000) dazu konfiguriert ist, das fünfte externe Wärmeträgerfluid (250) zu kühlen;
• in der zweiten Konfiguration die Maschine (1000) dazu konfiguriert ist, die Temperatur mindestens eines und bevorzugt jedes des ersten externen Wärmeträgerfluids (210), des dritten externen Wärmeträgerfluids (230) und des vierten externen Wärmeträgerfluids (240) zu erhöhen.

**8.** Maschine nach dem vorstehenden Anspruch, wobei das erste externe Wärmeträgerfluid (210) und das vierte externe Wärmeträgerfluid (240) ein einziges gemeinsames Wärmeträgerfluid bilden, und wobei

• der Ausgang (1140) des ersten Wärmeträgerfluids (210) des Absorbermoduls (1100) mit dem Eingang (1530) der vierten externen Wärmeträgerfluids (240) des Kondensatormoduls (1500) fluidisch verbunden ist, und/oder
• der Eingang (1130) des ersten externen Wärmeträgerfluids (210) des Absorbermoduls (1100) mit dem Ausgang (1540) des vierten externen Wärmeträgerfluids (240) des Kondensatormoduls (1500) fluidisch verbunden ist.

**9.** Maschine nach einem der zwei vorstehenden Ansprüche, wobei der Ausgang (1720) der Kältelösung (130) des Verdampfermoduls (1700) mit dem Eingang (1110) der mageren Lösung (110) des Absorbermoduls (1100) fluidisch verbunden ist, wobei die magere Lösung (110) und die Kältelösung (130) stromaufwärts oder auf der Ebene des Eingangs (1210) der mageren Lösung (110) der ersten Wärmeaustauschvorrichtung (1210) gemischt werden.

**10.** Maschine (1000) nach einem der vorstehenden Ansprüche, wobei die Maschine die zweite Wärmeaustauschvorrichtung (1300) umfasst, die Folgendes umfasst:

• einen Eingang (1330) der reichhaltigen Lösung (120),
• einen Ausgang (1340) der reichhaltigen Lösung (120),
• einen Eingang (1310) der mageren Lösung (110),
• einen Ausgang (1320) der mageren Lösung (110),
wobei die zweite Wärmeaustauschvorrichtung (1300) dazu konfiguriert ist, die reichhaltige Lösung (120) mit der mageren Lösung (110) in Wärmewechselwirkung treten zu lassen, um bevorzugt die Temperatur der reichhaltigen Lösung (120) ausgehend von der Temperatur der mageren Lösung (110) zu erhöhen,
wobei der Eingang (1330) der reichhaltigen Lösung (120) der zweiten Wärmeaustauschvorrichtung (1300) mit dem Ausgang (1240) der reichhaltigen Lösung (120) der ersten Wärmeaustauschvorrichtung (1200) fluidisch verbunden ist,

wobei der Ausgang (1340) der reichhaltigen Lösung (120) der zweiten Wärmeaustauschvorrichtung (1300) mit dem Eingang (1411) der reichhaltigen Lösung (120) der Verteilungszone (1410) des Systems (1400) fluidisch verbunden ist,

wobei der Eingang (1310) der mageren Lösung (110) der zweiten Wärmeaustauschvorrichtung (1300) mit dem Ausgang (1432) der mageren Lösung (110) des Erzeugungsmoduls (1420) des Systems (1400) fluidisch verbunden ist

wobei der Ausgang (1320) der mageren Lösung (110) der zweiten Wärmeaustauschvorrichtung (1300) mit dem Eingang (1210) der mageren Lösung (110) der ersten Wärmeaustauschvorrichtung (1200) fluidisch verbunden ist.

11. Maschine (1000) nach dem vorstehenden Anspruch, wobei die zweite Wärmeaustauschvorrichtung (1300) mindestens einen Plattenwärmetauscher umfasst.

12. Maschine (1000) nach dem vorstehenden Anspruch, wobei die magere Lösung (110) und die reichhaltige Lösung (120) im Gegenstrom in dem Plattenwärmetauscher der zweiten Wärmeaustauschvorrichtung (1300) zirkulieren.

13. Maschine (1000) nach einem der Ansprüche 7 bis 9 oder nach einem der Ansprüche 10 bis 12, kombiniert mit Anspruch 7, die eine dritte Wärmeaustauschvorrichtung (1600) umfasst, die Folgendes umfasst:

• einen ersten Eingang (1610) der Kältelösung (130),
• einen zweite Ausgang (1620) der Kältelösung (130),
• einen zweiten Eingang (1630) der Kältelösung (130), und
• einen zweiten Ausgang (1640) der Kältelösung (130),

wobei die dritte Wärmeaustauschvorrichtung (1600) dazu konfiguriert ist, die Kältelösung (130) vor ihrem Eintreten in das Verdampfermodul (1700) mit der Kältelösung (130) nach ihrem Austreten aus dem Verdampfermodul (1700) in Wärmewechselwirkung treten zu lassen, wobei der erste Eingang (1610) der Kältelösung (130) der dritten Wärmeaustauschvorrichtung (1600) mit dem Ausgang (1520) der Kältelösung (130) des Kondensatormoduls (1500) fluidisch verbunden ist,

wobei der erste Ausgang (1620) der Kältelösung (130) der dritten Wärmeaustauschvorrichtung (1600) mit dem ersten Eingang (1710) der Kältelösung (130) des Verdampfermoduls (1700) fluidisch verbunden ist,

wobei der zweite Eingang (1630) der Kältelösung (130) der dritten Wärmeaustauschvorrichtung (1600) mit dem Ausgang (1720) der Kältelösung (130) des Verdampfermoduls (1700) fluidisch verbunden ist,

wobei der zweite Ausgang (1640) der Kältelösung (130) der zweiten Wärmeaustauschvorrichtung (1600) mit dem Eingang (1210) der mageren Lösung (110) der ersten Wärmeaustauschvorrichtung (1200) fluidisch verbunden ist.

14. Maschine (1000) nach dem vorstehenden Anspruch, wobei die dritte Wärmeaustauschvorrichtung (1600) mindestens einen Plattenwärmetauscher umfasst.

15. Maschine (1000) nach einem der vorstehenden Ansprüche, wobei das erste Fluid Wasser und/oder ein Lösungsmittel, wie Lithiumnitrat oder Natriumthiocyanat umfasst, und wobei das zweite Fluid Ammoniak oder Alkohol umfasst.

**Claims**

1. Absorption machine (1000) comprising a mixture (100) circulating in a circuit, the mixture (100) comprising a first fluid and a second fluid, the machine (1000) having a first cold production configuration and a second heat production configuration, the circulating mixture (100) having a mass concentration of second fluid varying according to its position in the circuit, so as to define the circulating mixture, according to the position, a so-called poor solution (110), a so-called rich solution (120), and a so-called refrigerant solution (130), the machine (1000) comprising at least:

• one absorber module (1100) configured to increase the rate of mass concentration of the second fluid of the poor solution (110), so as to transform the poor solution (110) into rich solution (120),
• one first heat exchange device (1200) configured to make the rich solution (120) thermally interact from the temperature of the poor solution (110),
• one steam generation and rectification system (1400) for an absorption machine (1000), configured to transform the rich solution (120) so as to obtain the poor solution (110) at the outlet (1422) of the generator module (1420) and the refrigerant solution (130) at the outlet (1432) of the rectifier module (1430), wherein the mixture (100) circulates, comprising at least:

○ one distribution zone (1410) comprising an inlet (1411) of the rich solution (120), intended to be connected to a circuit of an absorption machine (1000) wherein the mixture (100) circulates,

○ a heat generator module (1420) comprising a first spiral plate heat exchanger (1420a) configured to heat the mixture coming from the distribution zone (1410), and comprising an outlet (1422) of the poor solution (110),

○ a rectifier module (1430) comprising a second spiral plate heat exchanger (1430a) configured to cool the mixture (100) coming from the distribution zone (1410), and comprising an outlet (1432) of the refrigerant solution (130),

and wherein the distribution zone (1410) is located, along a projection over a vertical axis, between the generator module (1420) and the rectifier module (1430), the distribution zone (1410), the generator module (1420) and the rectifier module (1430) being configured such that, from the generator module (1420) to the rectifier module (1430):

○ the first fluid of the rich solution (120) is condensed,

○ the second fluid of the rich solution (120) is evaporated,

to obtain the poor solution (110) at the outlet (1422) of the generator module (1420) and the refrigerant solution (130) at the outlet (1432) of the rectifier module (1430),

• a condenser module (1500) configured to condense the refrigerant solution (130) coming from the rectifier module (1430) of the system (1400),

• an evaporator module (1700) configured to evaporate at least partially, the refrigerant solution (130) coming from the condenser module (1500),

wherein:

• in the first configuration, the machine (1000) is configured to cool an external heat-transfer fluid (250) circulating in the evaporator module,

• in the second configuration, an external heat-transfer fluid (210) circulates in the absorber module and an external heat-transfer fluid (240) circulates in the condenser module, the machine being configured to increase the temperature of at least one of said external heat-transfer fluids, and

• the absorber module (1100) comprises:

○ an inlet (1110) of the poor solution (110), the poor solution (110) having a first temperature,

○ an outlet (1120) of the rich solution (120), the rich solution (120) having a second temperature less than the first temperature,

○ an inlet (1130) of a first external heat-transfer fluid (210), and

○ an outlet (1140) of the first external heat-transfer fluid (210),

the absorber module (1100) being configured to make a mixture of the poor solution (110) and of the refrigerant solution (130) thermally interact with the first external heat-transfer fluid (210), so as to transform the mixture of the poor solution (110) and of the refrigerant solution (130) into rich solution (120),

• the first heat exchange device (1200) comprises:

○ an inlet (1210) of the poor solution (110),

○ an outlet (1220) of the poor solution (110),

○ an inlet (1230) of the rich solution (120),

○ an outlet (1240) of the rich solution (120), and

the first heat exchange device (1200) being configured to increase the temperature of the rich solution (120) from the temperature of the poor solution,

the inlet (1230) of the rich solution (120) of the first heat exchange device (1200) being fluidically connected to the outlet (1120) of the rich solution (120) of the absorber module (1100), and

the outlet (1220) of the poor solution (110) of the first heat exchange device (1200) being fluidically connected to the inlet (1110) of the poor solution (110) of the absorber module (1100),

• in the steam generation and rectification system (1400):

○ the distribution zone (1410) comprises the inlet (1411) of the rich solution (130),
○ the generator module (1420) comprises the outlet (1422) of the poor solution (110),
○ the rectifier module (1430) comprises the outlet (1432) of the refrigerant solution (130),

the inlet (1411) of the rich solution (120) of the distribution zone (1410) being fluidically connected to the outlet (1240) of the rich solution (120) of the first heat exchange device (1200),
the generator module (1420) being configured to make the mixture (100) coming from the distribution zone (1410) and a second external heat-transfer fluid (220) thermally interact, so as to increase the temperature of the mixture (100),
the rectifier module (1420) being configured to make the mixture (100) coming from the distribution zone (1410) and a third external heat-transfer fluid (230) thermally interact, so as to increase the temperature of the mixture (100),
the system (1400) further comprising a pre-rectifier module (1440) comprising a third spiral plate heat exchanger (1440a) and disposed between the distribution zone (1410) and the rectifier module (1430), the pre-rectifier module (1440) comprising:

• an inlet (1443) of the rich solution (120),
• an outlet (1444) of the rich solution (120),

the pre-rectifier module being configured to make the rich solution (120) and the mixture (100) coming from the distribution zone (1410) thermally interact, so as to cool the mixture (100) coming from the distribution zone (1410) and heat the rich solution,
the inlet (1443) of the rich solution (120) being fluidically connected to the outlet (1120) of the rich solution (120) of the absorber module (1100),
the outlet (1444) of the rich solution (120) being fluidically connected to the inlet (1411) of the rich solution (120) of the distribution zone (1400) of the system (1400),
and wherein:

• the outlet (1444) of the rich solution (120) of the pre-rectifier module (1440) is fluidically connected to the inlet (1230) of the rich solution (120) of the first heat exchange device (1200),
or
• the machine comprises a second heat exchange device (1300) comprising:
• an inlet (1330) of the rich solution (120),

○ an outlet (1340) of the rich solution (120),
○ an inlet (1310) of the poor solution (110),
○ an outlet (1320) of the poor solution (110),

the second heat exchange device (1300) being configured to make the rich solution (120) thermally interact with the poor solution (110), preferably to make the temperature of the rich solution (120) increase, and make the temperature of the poor solution (110) decrease,
the inlet (1330) of the rich solution (120) of the second heat exchange device (1300) being fluidically connected to the outlet (1240) of the rich solution (120) of the first heat exchange device (1200),
the outlet (1340) of the rich solution (120) of the second heat exchange device (1300) being fluidically connected to the inlet (1411) of the rich solution (120) of the distribution zone (1410) of the system (1400),
the inlet (1310) of the poor solution (110) of the second heat exchange device (1300) being fluidically connected to the outlet (1432) of the poor solution (110) of the generator module (1420) of the system (1400),
the outlet (1320) of the poor solution (110) of the second heat exchange device (1300) being fluidically connected to the inlet (1210) of the poor solution (110) of the first heat exchange device (1200),
the inlet (1443) of the rich solution (120) of the pre-rectifier module (1440) is fluidically connected to the outlet (1240) of the rich solution (120) of the first heat exchange device (1200),
the outlet (1444) of the rich solution (120) of the pre-rectifier module is fluidically connected to the inlet (1330) of the rich solution (120) of the second heat exchange device (1300).

2. Machine (1000) according to the preceding claim, wherein the distribution zone (1410), the generator module (1420) and the rectifier module (1430) of the system (1400) are located in an envelope, wherein the distribution zone (1410), the generator module (1420) and the rectifier module (1430) are superposed in a main extension direction of the envelope.

3. Machine (1000) according to any one of the preceding claims, wherein:

• the poor solution (110) has a first rate of mass concentration of second fluid,
• the rich solution (120) has a second rate of mass concentration of second fluid,
• the refrigerant solution (130) has a third rate of mass concentration of second fluid, the first rate of concentration, the second rate of concentration, and the third rate of concentration each being different from one another.

4. Machine (1000) according to the preceding claim, wherein:

   • the first rate of concentration is less than the second rate of concentration, and
   • the first rate of concentration and the second rate of concentration are less than the third rate of concentration.

5. Machine (1000) according to any one of the preceding claims, wherein at least one from among the absorber module (1100), the first heat exchange module (1200), the condenser module (1500), the evaporator module (1700) comprises at least one plate heat exchanger.

6. Machine (1000) according to the preceding claim, wherein the plate heat exchanger is configured, such that the fluids passing through it circulate in countercurrent relative to one another.

7. Machine according to any one of the preceding claims, wherein:

   • the condenser module (1500) comprises:

      ◦ o an inlet (1510) of the refrigerant solution (130),
      ◦ o an outlet (1520) of the refrigerant solution (130),
      ◦ o an inlet (1530) of a fourth external heat-transfer fluid (240), and
      ◦ o an outlet (1540) of the fourth external heat-transfer fluid (240),

   the condenser module (1500) being configured to make the refrigerant solution (130) and the fourth external heat-transfer fluid (240) thermally interact, so as to condense the refrigerant solution (130),
   the inlet (1510) of the refrigerant solution (130) of the condenser module (1500) being fluidically connected to the outlet (1432) of the refrigerant solution (130) of the rectifier module (1430),

   • the evaporator module (1700) comprises:

      ◦ an inlet (1710) of the refrigerant solution (130),
      ◦ an outlet (1720) of the refrigerant solution (130),
      ◦ an inlet (1730) of a fifth external heat-transfer fluid (250),
      ◦ an outlet (1740) of the fifth external heat-transfer fluid (250),

   the evaporator module (1700) being configured to make the refrigerant solution (130) and the fifth external heat-transfer fluid (250) thermally interact, so as to modify, preferably to decrease, the temperature of the fourth external heat-transfer fluid (250) by the evaporation of at least some of the refrigerant solution (130),
   the inlet (1710) of the refrigerant solution (130) of the evaporator module (1700) being fluidically connected to the outlet of the refrigerant solution (130) of the condenser module (1500),
   the outlet (1720) of the refrigerant solution (130) of the evaporator module (1700) being fluidically connected to the inlet (1110) of the poor solution (110) of the absorber module (1100),
   and wherein:

   • In the first configuration, the machine (1000) is configured to cool the fifth external heat-transfer fluid (250),
   • In the second configuration, the machine (1000) is configured to increase the temperature of at least one from among, and preferably each from among, the first external heat-transfer fluid (210), the third external heat-transfer fluid (230), and the fourth external heat-transfer fluid (240).

8. Machine according to the preceding claim, wherein the first external heat-transfer fluid (210) and the fourth external heat-transfer fluid (240) form one single and same common external heat-transfer fluid, and wherein:

   • the outlet (1140) of the first external heat-transfer fluid (210) of the absorber module (1100) is fluidically connected to the inlet (1530) of the fourth external heat-transfer fluid (240) of the condenser module (1500), and/or
   • the inlet (1130) of the first external heat-transfer fluid (210) of the absorber module (1100) is fluidically connected to the outlet (1540) of the fourth external heat-transfer fluid (240) of the condenser module (1500).

9. Machine according to any one of the two preceding claims, wherein the outlet (1720) of the refrigerant solution (130) of the evaporator module (1700) is fluidically connected to the inlet (1110) of the poor solution (110) of the absorber module (1100), the poor solution (110) and the refrigerant solution (130) being mixed upstream or at the inlet (1210) of the poor solution (110) of the first heat exchange device (1210).

**10.** Machine (1000) according to any one of the preceding claims, the machine comprising the second heat exchange device (1300) comprising:

- an inlet (1330) of the rich solution (120),
- an outlet (1340) of the rich solution (120),
- an inlet (1310) of the poor solution (110),
- an outlet (1320) of the poor solution (110),

the second heat exchange device (1300) being configured to make the rich solution (120) thermally interact with the poor solution (110), preferably to make the temperature of the rich solution (120) increase from the temperature of the poor solution (110),

the inlet (1330) of the rich solution (120) of the second heat exchange device (1300) being fluidically connected to the outlet (1240) of the rich solution (120) of the first heat exchange device (1200),

the outlet (1340) of the rich solution (120) of the second heat exchange device (1300) being fluidically connected to the inlet (1411) of the rich solution (120) of the distribution zone (1410) of the system (1400),

the inlet (1310) of the poor solution (110) of the second heat exchange device (1300) being fluidically connected to the outlet (1432) of the poor solution (110) of the generator module (1420) of the system (1400),

the outlet (1320) of the poor solution (110) of the second heat exchange device (1300) being fluidically connected to the inlet (1210) of the poor solution (110) of the first heat exchange device (1200).

**11.** Machine (1000) according to the preceding claim, wherein the second heat exchange device (1300) comprises at least one plate heat exchanger.

**12.** Machine (1000) according to the preceding claim, wherein the poor solution (110) and the rich solution (120) circulate at counter-current in the plate heat exchanger of the second heat exchange device (1300).

**13.** Machine (1000) according to any one of claims 7 to 9, or to any one of claims 10 to 12, combined with claim 7, comprising a third heat exchange device (1600), comprising:

- a first inlet (1610) of the refrigerant solution (130),
- a second outlet (1620) of the refrigerant solution (130),
- a second inlet (1630) of the refrigerant solution (130), and
- a second outlet (1640) of the refrigerant solution (130),

the third heat exchange device (1600) being configured to make the refrigerant solution (130) before its entry into the evaporator module (1700) thermally interact with the refrigerant solution (130) after its exit from the evaporator module (1700),

the first inlet (1610) of the refrigerant solution (130) of the third heat exchange device (1600) being fluidically connected to the outlet (1520) of the refrigerant solution (130) of the condenser module (1500),

the first outlet (1620) of the refrigerant solution (130) of the third heat exchange device (1600) being fluidically connected to the first inlet (1710) of the refrigerant solution (130) of the evaporator module (1700),

the second inlet (1630) of the refrigerant solution (130) of the third heat exchange device (1600) being fluidically connected to the outlet (1720) of the refrigerant solution (130) of the evaporator module (1700),

the second outlet (1640) of the refrigerant solution (130) of the third heat exchange device (1600) being fluidically connected to the inlet (1210) of the poor solution (110) of the first heat exchange device (1200).

**14.** Machine (1000) according to the preceding claim, wherein the third heat exchange device (1600) comprises at least one plate heat exchanger.

**15.** Machine (1000) according to any one of the preceding claims, wherein the first fluid comprises water and/or a solvent, such as lithium nitrate or sodium thiocyanate, and wherein the second fluid comprises ammoniac or alcohol.

FIG. 1

1420a'
1430a'
1440a'

A

1420a"
1430a"
1440a"

A

1420a
1430a
1440a

A

FIG. 2A

1420b
1430b
1440b

1420a
1430a
1440a

FIG. 2B

FIG. 3A

FIG. 3B

FIG. 4

FIG. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5916258 A
- FR 2993648 A1